(19) Europäisches Patentamt
European Patent Office
Office européen des brevets

(11) **EP 2 910 982 B1**

(12) **EUROPEAN PATENT SPECIFICATION**

(45) Date of publication and mention
of the grant of the patent:
**27.01.2021 Bulletin 2021/04**

(51) Int Cl.:
*G01V 8/12* *(2006.01)*          *G01V 8/14* *(2006.01)*

(21) Application number: **14198961.6**

(22) Date of filing: **18.12.2014**

(54) **PHOTOELECTRIC SENSOR**

FOTOELEKTRISCHER SENSOR

CAPTEUR PHOTO-ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2014 JP 2014032390
24.07.2014 JP 2014151246**

(43) Date of publication of application:
**26.08.2015 Bulletin 2015/35**

(73) Proprietor: **OMRON CORPORATION
Kyoto, Kyoto 600-8530 (JP)**

(72) Inventors:
• **OKUNO, Motoharu
Kyoto, Kyoto 600-8530 (JP)**
• **IMAI, Kiyoshi
Kyoto, Kyoto 600-8530 (JP)**
• **UEMURA, Kosuke
Kyoto, Kyoto 600-8530 (JP)**

(74) Representative: **Horn Kleimann Waitzhofer
Patentanwälte PartG mbB
Ganghoferstrasse 29a
80339 München (DE)**

(56) References cited:
**JP-A- 2004 320 373          US-A- 5 608 207
US-A1- 2006 212 240          US-A1- 2014 001 345**

EP 2 910 982 B1

**Description**

FIELD

The present invention relates to a photoelectric sensor. In particular, the present invention relates to a retro-reflective photoelectric sensor and a transmissive photoelectric sensor.

BACKGROUND

A photoelectric sensor disclosed in JP 2002-171162A is taken as a conventional photoelectric sensor. In this photoelectric sensor, a sensitivity potentiometer (rotatable knob) adjusts a variable resistance for adjusting a gain of a received light signal. Other examples of photoelectric sensors comprising adjustment of the gain of a received light signal are also disclosed in US 5608207 A and in US 2014/001345 A1.

OVERVIEW OF THE INVENTION

PROBLEMS TO BE SOLVED BY THE INVENTION

Conventionally, these photoelectric sensors detect a detection object using the phenomenon that a received light signal value decreases when the detection object passes by. However, if the detection object is transparent, the received light signal value slightly decreases when the detection object passes by. Accordingly, in order to enable this slight variation of the received light signal value to be recognized, a threshold for detecting the transparent object needs to be set by a very fine adjustment. However, in the invention disclosed in JP 2002-171162A, a sensitivity parameter is adjusted only by a sensitivity potentiometer, and in order to cover detection objects that are arranged with various detection distances and have various transmissivities, the sensitivity parameter needs to have a large range between its minimum and maximum values. Thus, an amount of variation in the sensitivity parameter per unit of rotational angle of the sensitivity potentiometer that is used when an operator performs adjustment is large. It is therefore difficult to perform appropriate adjustment for detecting a detection object such as a transparent object in which a small difference in setting largely affects detection accuracy.

Therefore, it is an object of the present invention to provide a photoelectric sensor that makes it easy for an operator to perform even very fine adjustment of a detection object for which variation of a received light signal value is small even when the detection object is detected.

MEANS FOR SOLVING THE PROBLEMS

A photoelectric sensor according to a first aspect of the present invention is directed to a transmissive photoelectric sensor or a retro-reflective photoelectric sensor for use in combination with a retro-reflective member. The photoelectric sensor includes light projecting means, light receiving means, determination means, received light signal adjustment means, and sensitivity parameter adjustment means. The light projecting means emits detection light for detecting a detection object that is present in a detection region. The light receiving means receives the detection light from the detection region. The determination means compares a received light signal value, which is an output signal value of the light receiving means, with a threshold, and determines whether or not the detection object is present. The received light signal adjustment means includes an operation unit and a first adjustment unit. The operation unit adjusts, by its position being operated in an operable range, at least one sensitivity parameter of projection light power and received light gain within a predetermined range. The first adjustment unit adjusts, by an operation of the operation unit from one end to the other end of the operable range, the at least one sensitivity parameter so that a ratio of the maximum value to the minimum value of the received light signal value is not greater than 2.6. The sensitivity parameter adjustment means includes a trigger input reception unit and a second adjustment unit. The second adjustment unit adjusts at least one of the projection light power, the received light gain, and the threshold when the trigger input reception unit has received a trigger input while the operation unit is at a predetermined position in the state in which the detection object is not present in the detection region. The second adjustment unit adjusts at least one of the projection light power, the received light gain, and the threshold so that the threshold is between the maximum value and the minimum value of the received light signal value, and an adjustment range of the first adjustment unit is a predetermined range that is included between 50% and 130% in terms of a ratio of the threshold to the received light signal value.

A photoelectric sensor according to a second aspect of the present invention is directed to a transmissive photoelectric sensor, or a retro-reflective photoelectric sensor for use in combination with a retro-reflective member. The photoelectric sensor includes light projecting means, light receiving means, determination means, sensitivity parameter adjustment means, and the threshold adjustment means. The light projecting means emits detection light for detecting a detection object that is present in a detection region. The light receiving means receives the detection light from the detection region. The determination means compares a received light signal value, which is an output signal value of the light receiving means, with a threshold, and determines whether or not the detection object is present. The sensitivity parameter adjustment means includes a trigger input reception unit and a third adjustment unit. The third adjustment unit adjusts, when the trigger input reception unit has received a trigger input in the state in which the detection object is not present in the detection region, at least one sensitivity parameter of projection light power and received light gain so that the received light signal value is a predetermined standard signal value. The threshold adjustment means includes an operation unit and a fourth adjustment unit. The position of the operation unit can be operated within an operable range. The fourth adjustment unit varies, by an operation of the operation unit from one end to the other of the operable range, the threshold in a predetermined range that is included between 50% and 130% in terms of a ratio of the threshold to the standard signal value.

It is preferable that the predetermined range be between 70% and 110%.

EFFECT OF THE INVENTION

In the photoelectric sensor according to the first aspect, the received light signal adjustment means restricts the adjustable range of the operation unit in which at least one sensitivity parameter of projection light power and received light gain is adjusted, so that a ratio of the maximum value to the minimum value of the received light signal value is not greater than 2.6. Furthermore, in the photoelectric sensor according to the second aspect, the adjustable range of the operation unit in which a threshold is adjusted is restricted to the predetermined range that is included between 50% and 130% in terms of a ratio of the threshold to the standard signal value. Accordingly, provided that the operable range of the operation unit is in the same range as that of the conventional sensitivity potentiometer, the variation amount of the sensitivity parameter per unit of the operation amount of the operation unit is reduced as compared with that of the conventional sensor. This makes it easy to perform fine adjustment of a sensitivity parameter.

BRIEF DESCRIPTION OF THE DRAWINGS

Fig. 1 is a diagram illustrating an overall configuration of a photoelectric sensor according to a first embodiment.
Fig. 2 is a diagram illustrating detailed configurations of light projecting means, light receiving means, a first adjustment unit, a second adjustment unit, determination means, and a storage unit according to the first embodiment.
Fig. 3 is a perspective view illustrating an outer appearance of the photoelectric sensor.
Fig. 4 is an enlarged view of an operation panel of the photoelectric sensor.
Fig. 5 is a flowchart illustrating a sensitivity adjustment operation of the photoelectric sensor according to the first embodiment.
Fig. 6 is a diagram illustrating an overall configuration of a photoelectric sensor according to a second embodiment.
Fig. 7 is a diagram illustrating detailed configurations of light projecting means, light receiving means, a first adjustment unit, a second adjustment unit, determination means, and a storage unit according to the second embodiment.
Fig. 8 is a flowchart illustrating a sensitivity adjustment operation of the photoelectric sensor according to the second embodiment.
Fig. 9 is a diagram illustrating an effect of the photoelectric sensors according to the first and second embodiments.
Fig. 10 is a diagram illustrating a modification of the photoelectric sensor according to the first embodiment.
Fig. 11 is a diagram illustrating a modification of the photoelectric sensor according to the second embodiment.
Fig. 12 is a diagram illustrating detailed configurations of a trigger input reception unit, an indicator, determination means, and the second adjustment unit.

DETAILED DESCRIPTION

First Embodiment

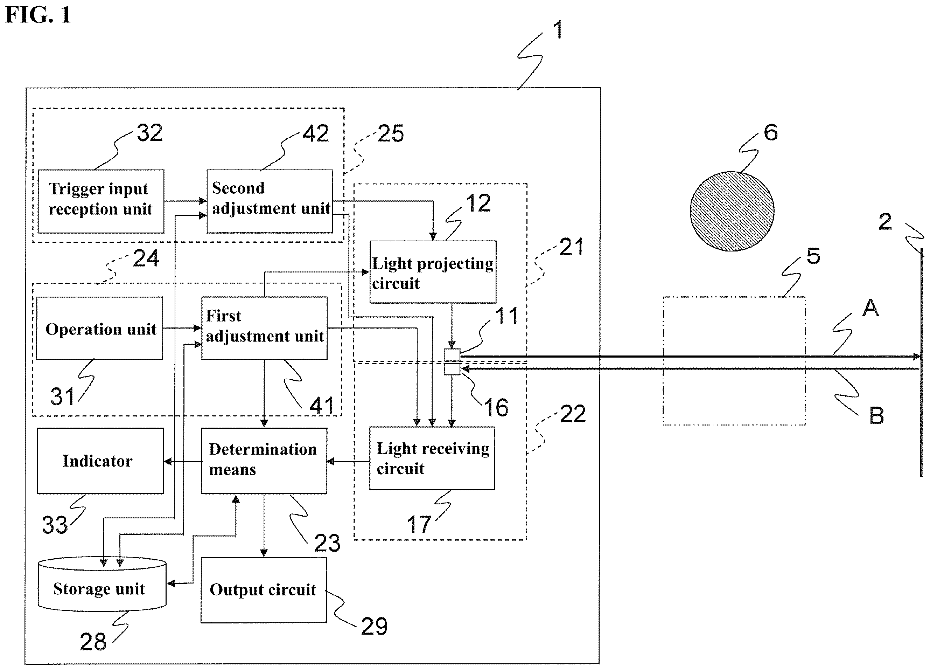

Hereinafter, a photoelectric sensor 1 according to a first embodiment of the present invention will be described with reference to the drawings. The photoelectric sensor 1 according to the first embodiment is a retro-reflective photoelectric sensor for use in combination with a retro-reflective member 2. Fig. 1 is a diagram illustrating an overall configuration of the photoelectric sensor 1 according to the first embodiment.

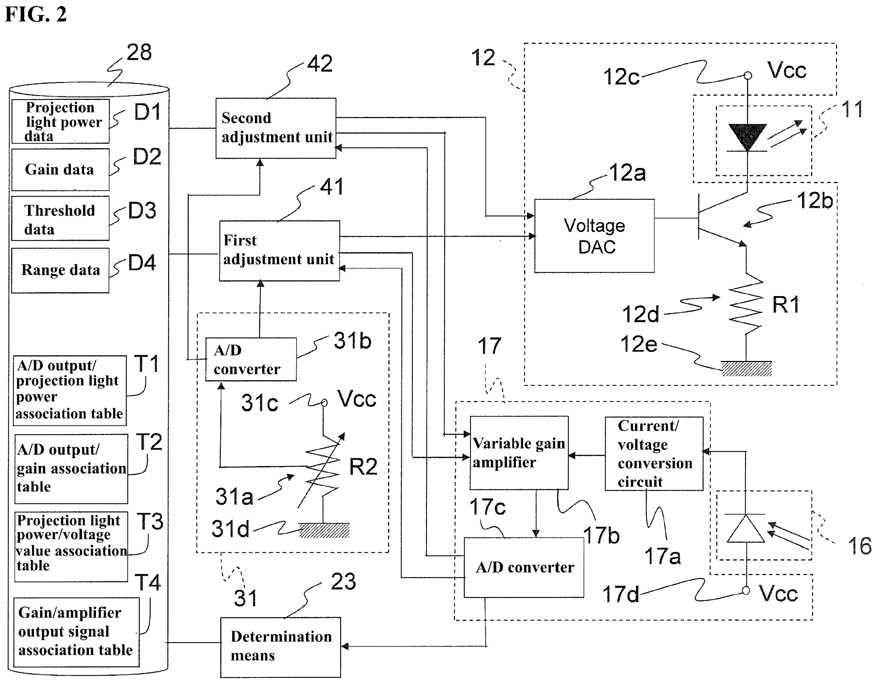

As shown in Fig. 1, the photoelectric sensor 1 includes light projecting means 21, light receiving means 22, determination means 23, received light signal adjustment means 24, sensitivity parameter adjusting means 25, a storage unit 28, an output circuit 29, and an indicator 33. The received light signal adjustment means 24 includes an operation unit 31 and a first adjustment unit 41. The sensitivity parameter adjusting means 25 includes a trigger input reception unit 32 and a second adjustment unit 42. Fig. 2 is a diagram illustrating detailed configurations of the light projecting means 21, the light receiving means 22, a first adjustment unit 41, the second adjustment unit 42, the determination means 23, and the storage unit 28.

The light projecting means 21 emits detection light A for detecting a detection object 6 that is present in a detection region 5. As shown in Figs. 1 and 2, the light projecting means 21 includes a light projecting element 11 such as a light emitting diode for emitting the detection light A, and a light projecting circuit 12 for driving the light projecting element 11. As shown in Fig. 2, the light projecting circuit 12 includes a voltage output digital/analog converter (voltage DAC) 12a, a transistor 12b, a fixed power supply 12c (voltage value: Vcc), a resistor 12d, and a ground (GND) 12e. Fig. 2 shows the case where the light projecting element 11 is a light emitting diode. The anode of the light projecting element 11 is connected to the fixed power supply 12c. The cathode of the light projecting element 11 is connected to the collector of the transistor 12b. The voltage DAC 12a is connected to the base of the transistor 12b. One end of the resistor 12d for preventing an excess current is connected to the emitter of the transistor 12b. The other end of the resistor 12d is connected to the ground 12e. That is, the other end of the resistor 12d is earthed.

The voltage DAC 12a is connected to the first adjustment unit 41 and the second adjustment unit 42. The voltage DAC 12a receives an output voltage signal from the first adjustment unit 41 and/or the second adjustment unit 42, and outputs, to the base of the transistor 12b, a pulse voltage that includes a Hi voltage corresponding to the output voltage signal and a Lo voltage of 0V. The cycle of this pulse voltage may be a fixed value that is defined according to the product specification. Alternatively, it is also possible to make the cycle of the pulse voltage variable using separate adjustment means (not shown). If a Hi voltage has been applied from the voltage DAC 12a, a current flows from the fixed power supply 12c to the collector of the transistor 12b, and the light projecting element 11 emits light. The higher the Hi voltage is the higher the current will be, and thus power of light emitted from the light projecting element 11 increases.

The storage unit 28 has stored therein a projection light power/voltage value association table T3 in which a relationship of a magnitude of the Hi voltage to power of light (projection light power) emitted from the light projecting element 11 is recorded. The projection light power/voltage value association table T3 is created by, for example, a procedure with the following three steps:

(Step 1) A plurality of different discrete voltages are applied to the voltage DAC 12a in a state in which the light projecting means 21 is mounted on a substrate.
(Step 2) Light that is emitted by the light projecting element 11 when each of the plurality of different discrete voltages is applied is measured by a photometer or a light detector.
(Step 3) Projection light power obtained from the measurement result is stored in the projection light power/voltage value association table T3 in association with the voltage applied to the voltage DAC 12a.

When adjusting projection light power, the first adjustment unit 41 and the second adjustment unit 42, which will be described later, calculate projection light power after adjustment and then reference the projection light power/voltage value association table T3. Then, the first adjustment unit 41 and the second adjustment unit 42 output, to the voltage DAC 12a, an output voltage signal for letting the voltage DAC 12a output a voltage value that corresponds to the projection light power after adjustment. Note that, when the projection light power after adjustment does not correspond to any of the projection light power values stored in the projection light power/voltage value association table T3, it is also possible that the first adjustment unit 41 and the second adjustment unit 42 extract a value stored in the projection light power/voltage value association table T3 that is approximate to the projection light power after adjustment, and calculate, using linear interpolation, a voltage value that corresponds to the projection light power after adjustment. Note that a method for calculating projection light power by the first adjustment unit 41 and the second adjustment unit 42 will be described later. With this, the projection light intensity (projection light power) of the detection light A is adjusted.

The retro-reflective member 2 is arranged facing the light projecting element 11, and the detection light A emitted from the light projecting element 11 is reflected on the retro-reflective member 2 and results in return light B. The return light B corresponds to the detection light A from the detection region 5. The detection light A is, for example, visible light but it only needs to be light that is returned by the retro-reflective member 2, and a wavelength range thereof is not particularly limited. The retro-reflective member 2 includes a plurality of corner cubes. The incident light is reflected in the retro-reflective member 2, and then returned in the same direction as that of the incident light.

The light receiving means 22 receives the return light B. As shown in FIGS. 1 and 2, the light receiving means 22 includes a light receiving element 16 and a light receiving circuit 17. The light receiving element 16 is, for example, a photodiode and varies an output signal according to the received light amount of the return light B. Fig. 2 shows the case where the light receiving element 16 is a photodiode. As shown in Fig. 2, the light receiving circuit 17 includes a current/voltage conversion circuit 17a, a variable gain amplifier 17b, an A/D converter 17c, and a fixed power supply 17d (voltage value: Vcc). Note that it is also possible that the fixed power supply 12c serves also as the fixed power supply 17d. The anode of the light receiving element 16 is connected to the fixed power supply 17d. The cathode of the light receiving element 16 is connected to the current/voltage conversion circuit 17a. The light receiving element 16 outputs, to the current/voltage conversion circuit 17a, a photo current that corresponds to the intensity of the received return light B. The current/voltage conversion circuit 17a outputs, to the variable gain amplifier 17b, a voltage value that corresponds to the magnitude of the photo current. The variable gain amplifier 17b is connected to the first adjustment unit 41 and the second adjustment unit 42. The variable gain amplifier 17b receives amplifier output signals from the first adjustment unit 41 and the second adjustment unit 42. A method for determining amplifier output signals of the first adjustment unit 41 and the second adjustment unit 42 will be described later.

The variable gain amplifier 17b amplifies a voltage that is output from the current/voltage conversion circuit 17a with a gain that corresponds to the amplifier output signal, and outputs the amplified voltage to the A/D converter 17c. The gain of the variable gain amplifier 17b corresponds to the gain of the received light amount in the light receiving means 22. The storage unit 28 has stored therein a gain/amplifier output signal association table T4 in which a relationship between an amplifier output signal and a gain of the variable gain amplifier 17b is recorded. The gain/amplifier output signal association table T4 is created by, for example, obtaining amplifier output signals that correspond to a plurality of discrete gains based on the product specification of the variable gain amplifier 17b. The A/D converter 17c converts a voltage value from the variable gain amplifier 17b into a digital value, and outputs the digital value to the first adjustment unit 41, the second adjustment unit 42, and the determination means 23. The first adjustment unit 41, the second adjustment unit 42, and the determination means 23 receive the digital value from the A/D converter 17c as a received light signal value of the return light B.

The determination means 23 compares the received light signal value with a threshold that is stored in the storage unit 28 as threshold data D3, and determines whether or not the detection object 6 is present. Specifically, the received light signal value exceeds the threshold when the detection object 6 is not present in the detection region 5. However, the received light amount of the return light B decreases when the detection object 6 is present in the detection region 5, resulting in a reduction in the received light signal value. When the received light signal value is less than the threshold, the determination means 23 determines that the detection object 6 is present in the detection region 5. The threshold that is used by the determination means 23 is stored in the storage unit 28, which will be described later. Furthermore, the result of the determination by the determination means 23 is output to the indicator 33 as an indicator ON/OFF signal. The output circuit 29 outputs the determination result obtained by the determination means 23 to an external device such as a controller of the photoelectric sensor 1 or a PC.

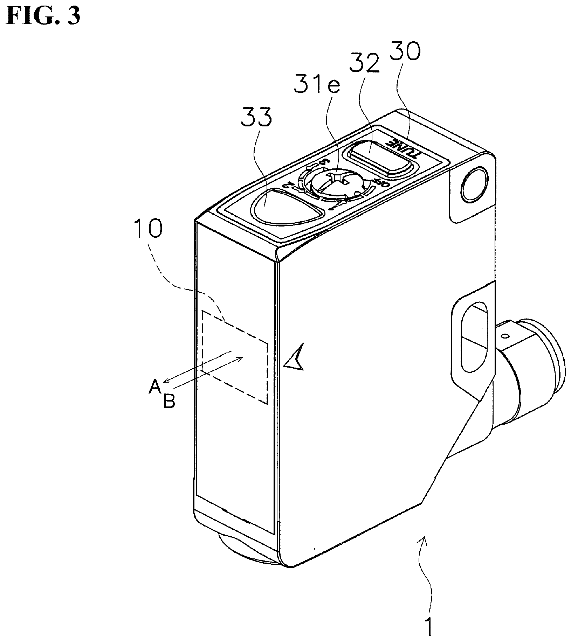

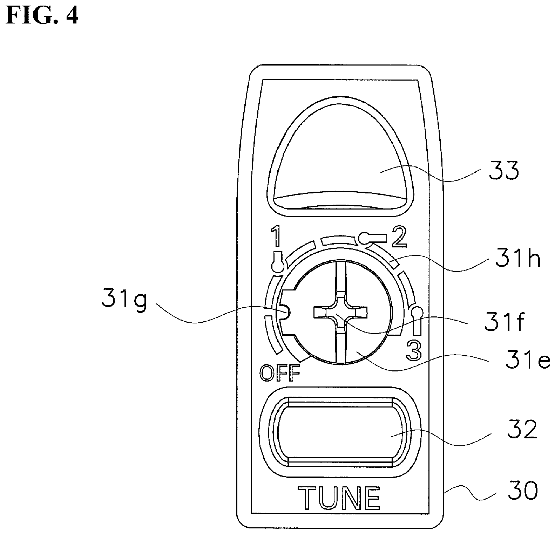

An operator operates the operation unit 31 to change its position within an operable range. FIG. 3 is a perspective view illustrating an outer appearance of the photoelectric sensor 1 when seen from diagonally in front of a light projecting/receiving section 10 for projecting and receiving the detection light A and the return light B. FIG. 4 is an enlarged view of an operation panel 30 of the photoelectric sensor 1. Referring to Fig. 3, the operation panel 30 is provided on the upper surface of the photoelectric sensor 1. The target ratio setting means 31 includes an operation member 31e. The operation member 31e is provided near the center of the operation panel 30. The operation member 31e is a rotatable member in the shape of a dome that has a plus (+) slot 31f into which a Phillips head screwdriver can be inserted. As shown in Fig. 4, the operation member 31e has an indicating section 31g formed with a recess, and the operator can recognize an approximate position based on the position of a scale 31h indicated by the indicating section 31g. Note that the indication method of the indicating section 31g shown in Fig. 4 is merely an example, and it is also possible to indicate a specific setting range by another method.

As shown in FIG. 2, the operation unit 31 further includes a variable resistor 31a, the A/D converter 31b, a fixed power supply 31c (voltage value: Vcc), and a ground (GND) 31d. It is also possible that the fixed power supply 12c or 17d serves also as the fixed power supply 31c. Furthermore, it is also possible that the ground 12e serves also as the ground 31d. When the operation member 31e rotates, the variable resistor 31a shown in Fig. 2 varies according to the amount of the rotation. The variable resistor 31a is connected to the fixed power supply 31c and the ground 31d, and outputs a voltage value that varies with the variation of the resistance value of the variable resistor 31a to the A/D converter 31b. The A/D converter 31b converts the voltage value that was output from the variable resistor 31a into a digital value. The A/D converter 31b outputs this digital value to the first adjustment unit 41.

In the target ratio setting means 31, an adjustment range of a sensitivity parameter is set in advance so that fine adjustment of the sensitivity parameter by an operator is possible. Here, a movable range of the operation unit 31 is referred to as an operable range. In the example of FIG. 4, the range from the shown position "OFF" to the position "3" is the operable range. Note that, in the present embodiment, a sensitivity parameter that is adjusted within a predetermined adjustment range by operation of the operation unit 31 is referred to as "second sensitivity parameter". The second sensitivity parameter refers to at least one sensitivity parameter of projection light intensity (projection light power) of detection light A emitted from the light projecting means 21 and a gain of the received light amount (received light gain) of the light receiving means 22.

Referring to FIG. 2, the storage unit 28 has stored, in addition to the above-described threshold data D3, projection light power/voltage value association table T3, and gain/amplifier output signal association table T4, projection light power data D1, gain data D2, range data D4, and an A/D output/projection light power association table T1, and an A/D output/gain association table T2. The projection light power data D1 is data relating to projection light power, which is one of the sensitivity parameters, and is specifically a Hi voltage of the voltage DAC 12a. The gain data D2 is data of a gain (received light gain) of the variable gain amplifier 17b, which is the other of the sensitivity parameters. The range data D4, the A/D output/projection light power association table T1, and the A/D output/gain association table T2 will be described later. The storage unit 28 is realized by a memory such as a ROM or a RAM, a hard disk, or the like. The storage unit 28 has stored therein in advance defaults of projection light power, a received light gain, and a threshold, as the projection light power data D1, the gain data D2, and the threshold data D3. The first adjustment unit 41 and the second adjustment unit 42, which will be described later, reference and rewrite the stored defaults of a threshold and a sensitivity parameter.

The first adjustment unit 41 acquires a digital value from the A/D converter 31b, and adjusts the second sensitivity parameter. Specifically, when projection light power is adjusted, the first adjustment unit 41 references the A/D output/projection light power association table T1 stored in the storage unit 28. In the A/D output/projection light power association table T1, a relationship between a digital value from the A/D converter 31b and projection light power is stored. The first adjustment unit 41 acquires a digital value from the A/D converter 31b, and obtains a projection light power that corresponds to the acquired digital value from the A/D output/projection light power association table T1. Then, the first adjustment unit 41 references the projection light power/voltage value association table T3, and outputs, to the voltage DAC 12a, an output voltage signal for letting the voltage DAC 12a output a voltage value that corresponds to the obtained projection light power. Note that, when the obtained projection light power does not correspond to any of the projection light power values stored in the projection light power/voltage value association table T3, the first adjustment unit 41 extracts a value stored in the projection light power/voltage value association table T3 that is approximate to the projection light power after adjustment, and calculates, using linear interpolation, a voltage value that corresponds to the projection light power after adjustment. Here, the maximum projection light power in the A/D output/projection light power association table T1 is assumed to be a projection light power that corresponds to the minimum digital value when the operation member 31e is located at one end of the operable range (position "OFF") (the relationship between the position of the operation member 31e and the output digital value will be described later). It is also assumed that the minimum projection light power is the projection light power that corresponds to the maximum digital value when the operation member 31e is located at the other end of the operable range (position "3"). Here, in the A/D output/projection light power association table T1, the relationship between the digital values from the A/D converter 31b and the values of projection light power is defined such that a ratio of the maximum projection light power to the minimum projection light power is not greater than 2.6.

The A/D output/projection light power association table T1 is created by, for example, a procedure with the following three steps:

(Step 1) A first digital value deg1 that is output by the A/D converter 31b when the operation member 31e is directed to one end of the scale 31h (for example, the position "OFF") is measured, and the projection light power of the first digital value deg1 is defined as "minimum projection light power minP". The minimum projection light power minP can be empirically defined by a manufacturer according to, for example, a detection object of the photoelectric sensor 1.

(Step 2) A second digital value deg2 that is output by the A/D converter 31b when the operation member 31e is directed to the other end of the scale 31h (for example, the position "3") is measured, and the projection light power that corresponds to the second digital value deg2 is defined as "maximum projection light power maxP". The maximum projection light power maxP can be set based on the product specification of the light projecting element 11, for example.

(Step 3) The projection light power P of a third digital value deg3 between the first digital value deg1 and the second digital value deg2 is determined by linear interpolation. That is, P is determined so that $(deg3 - deg1) : (deg2 - deg3) = (P - minP) : (maxP - P)$ is satisfied.

Furthermore, when adjusting a received light gain, the first adjustment unit 41 references the A/D output/gain association table T2 stored in the storage unit 28. In the A/D output/gain association table T2, a relationship between a digital value from the A/D converter 31b and a gain value of the variable gain amplifier 17b is stored.

The A/D output/gain association table T2 is created by, for example, a procedure with the following three steps:

(Step 1) A first digital value deg1 that is output by the A/D converter 31b when the operation member 31e is directed to one end of the scale 31h (for example, the position "OFF") is measured, and the received light gain that corresponds to the first digital value deg1 is defined as "minimum gain minG". The minimum gain minG can be empirically defined by a manufacturer according to a detection object of the photoelectric sensor 1, for example.

(Step 2) A second digital value deg2 that is output by the A/D converter 31b when the operation member 31e is directed to the other end of the scale 31h (for example, the position "3") is measured, and the gain that corresponds to the first digital value deg2 is defined as "maximum gain maxG". The maximum gain maxG can be set based on the product specification of the variable gain amplifier 17b, for example.

(Step 3) The gain G of received light of a third digital value deg3 between the first digital value deg1 and the second digital value deg2 is determined by linear interpolation. That is, G is defined so that (deg3 - deg1) : (deg2 - deg3) = (G - minG) : (maxG - G) is satisfied.

The first adjustment unit 41 acquires a digital value from the A/D converter 31b, and obtains the received light gain that corresponds to the acquired digital value from the A/D output/gain association table T2. Then, first adjustment unit 41 references the gain/amplifier output signal association table T4, and outputs, to the variable gain amplifier 17b, an amplifier output signal for letting the variable gain amplifier 17b set the obtained gain. Note that, when the obtained gain does not correspond to any of the gain values stored in the gain/amplifier output signal association table T4, it is also possible that the first adjustment unit 41 extracts a value stored in the gain/amplifier output signal association table T4 that is approximate to the obtained gain, and calculates, using linear interpolation, an amplifier output signal that corresponds to the obtained gain. Here, in the A/D output/gain association table T2, the gain value that corresponds to the minimum digital value when the operation member 31e is located at one end of the operable range is defined as "maximum gain". Also, the gain value that corresponds to the maximum digital value when the operation member 31e is located at the other end of the operable range is defined as "minimum gain". Here, in the A/D output/gain association table T2, a relationship between a digital value from the A/D converter 31b and a gain value of the variable gain amplifier 17b is defined such that a ratio of the maximum gain to the minimum gain is not greater than 2.6. With this, by the operation unit 31 being operated from one end to the other of the operable range, the first adjustment unit 41 can adjust the second sensitivity parameter so that a ratio of the maximum value to the minimum value of the received light signal value is not greater than 2.6.

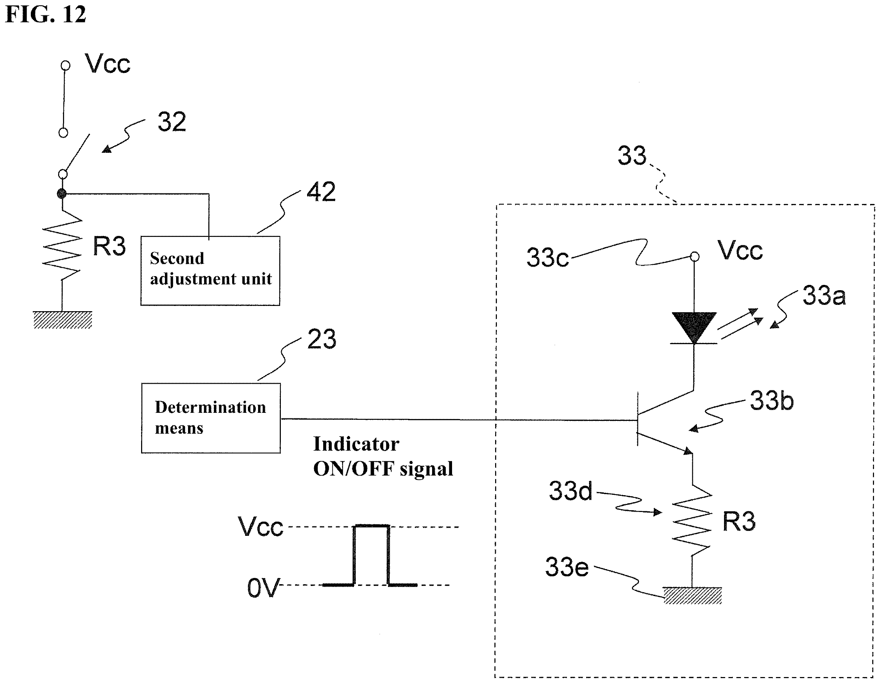

The trigger input reception unit 32 is a button that is pressed by an operator when adjustment by the sensitivity parameter adjustment means 25 is started. FIG. 12 is a diagram illustrating detailed configurations of the trigger input reception unit 32, the indicator 33, the determination means 23, and the second adjustment unit 42. As shown in FIG. 4, the adjustment button 32 corresponds to a so-called tact switch. When the adjustment button 23 has been pressed by an operator, a signal of a power supply voltage Vcc, for example, is output to the second adjustment unit 42. Upon input of the signal of the power supply voltage Vcc, the second adjustment unit 42 can determine that a trigger input was made. As shown in FIG. 3, the trigger input reception unit 32 is arranged at a position that is farther from the light projecting/receiving section 10 than the operation member 31e is. The trigger input reception unit 32 receives a trigger input for causing the second adjustment unit 42 to execute a sensitivity parameter adjustment operation, which will be described later. That is, when the trigger input reception unit 32 has received a trigger input, the sensitivity parameter adjustment means 25 executes the sensitivity parameter adjustment operation by the second adjustment unit 42. The trigger input reception unit 32 is pressed after the operation member 31e is set at a predetermined position (for example, the position "OFF") in a state in which the detection object 6 is not present in the detection region 5. In the description below, the position at which the operation member 31e is set when the trigger input reception unit 32 has received a trigger input is referred to as "initial position".

When the trigger input reception unit 32 has received a trigger input, the second adjustment unit 42 adjusts at least one of projection light power, a received light gain, and the threshold. The second adjustment unit can detect that the trigger input reception unit 32 has received a trigger input by, for example, a voltage of the fixed power supply being transmitted from the trigger input reception unit 32. Here the sensitivity parameter that is adjusted by the second adjustment unit 42 is referred to as "first sensitivity parameter".

In this case, the second adjustment unit 42 adjusts the first sensitivity parameter so that the following conditions (1) and (2) are satisfied:

(1) The threshold is between the minimum received light signal value set for the operation of the operation unit 31 and the maximum received light signal value set for the operation of the operation unit 31; and
(2) An adjustment range of the first adjustment unit 41 is a range that is included between 50% and 130% in terms of a ratio of the threshold to the received light signal value.

Note that the reason why the adjustment range is a range that is included between 50% and 130% in the above-described condition (2) is that the inventors of the present invention found that adjustment for detecting a transparent object is possible when a range between 50% and 130% is set. Furthermore, it is more preferable that the adjustment range of the first adjustment unit 41 be a range between 70% and 110%, because it is easy for an operator to perform fine adjustment. Here, data for defining the above-described range that is included between 50% and 130% or the like is stored in the storage unit 28 as the range data D4. The range data D4 includes a lower limit value K1 (%) and an upper limit value K2 (%). The range data D4 is stored as a predetermined value in the storage unit 28. The range data D4 is referenced by the second adjustment unit 42.

The second adjustment unit 42 determines a received light signal value after adjustment (i.e. the adjusted received light signal value) in which the above-described conditions (1) and (2) are satisfied. Then, the second adjustment unit 42 compares the received light signal value that was received after reception of the trigger input, with the received light signal value after adjustment, and obtains a first sensitivity parameter after adjustment.

When the first sensitivity parameter is projection light intensity (projection light power) of the detection light A, the second adjustment unit 42 acquires the threshold Vth stored as the threshold data D3 in the storage unit 28. Also, when the second sensitivity parameter is the received light gain, the second adjustment unit 42 sets the projection light power such that the following "condition A" and "condition B" are satisfied:

"condition A": In the A/D output/gain association table T2, the ratio (Vth/Vmin) of the acquired threshold Vth to the minimum received light signal value Vmin (received light signal value Vmin when the variable gain amplifier 17b has set the gain Gmin that corresponds to the maximum digital value Dmax) set by the operation of the operation unit 31 is K2 (%); and

"condition B": In the A/D output/gain association table T2, the ratio (Vth/Vmax) of the acquired threshold Vth to the maximum received light signal value Vmax (received light signal value Vmax when the variable gain amplifier 17b has set the gain Gmax that corresponds to the minimum digital value Dmin) set by the operation of the operation unit 31 is K1 (%).

The above-described Dmax, Gmin, Dmin, and Gmax are stored in the A/D output/gain association table T2. The minimum received light signal value Vmin_current that is set for the operation of the operation unit 31 when a trigger input was received is derived in the following manner. First, the second adjustment unit 42 acquires a received light signal Vcurrent that was received after reception of the trigger input, and a digital value Dcurrent that is output by the A/D converter 31b at that time. Then, the second adjustment unit 42 references the A/D output/gain association table T2, and acquires a gain Gcurrent that corresponds to the digital value Dcurrent. Vmin_current is calculated based on Formula 1 of Gmin, Gcurrent, and Vcurrent.

$$Vmin\_current = Vcurrent * Gmin / Gcurrent \ldots (Formula\ 1)$$

The maximum received light signal value Vmax_current when a trigger input was received is also calculated by Formula 2 of Gmax, Gcurrent, and Vcurrent although the operation is performed by the operation unit 31.

$$Vmax\_current = Vcurrent * Gmax / Gcurrent \ldots (Formula\ 2)$$

Here, when (Vth/Vmin_current) is greater than K2, the target signal value of the received light that satisfies "condition A" and is obtained by Vth*100/K2 is Vtarget1. At that time, the second adjustment unit 42 references the A/D output/projection light power association table T1, and acquires a projection light power Pcurrent that corresponds to Dcurrent. The target projection light power Ptargetl to which the power is to be adjusted by the second adjustment unit 42 can be set in the following Formula 3-1.

$$Ptarget1 = Pcurrent * Vtarget / Vmin\_current \ldots (Formula\ 3\text{-}1)$$

When (Vth/Vmax_current) is less than K1, the target received light signal value that satisfies "condition B" and is obtained by Vth*100/K1 is Vtarget2. Here, the second adjustment unit 42 references the A/D output/projection light power association table T1, and acquires a projection light power Pcurrent that corresponds to Dcurrent. The target projection light power Ptarget2 to which the power is to be adjusted by the second adjustment unit 42 can be set in the following Formula 3-2.

$$Ptarget2 = Pcurrent * Vtarget / Vmax\_current \ldots (Formula\ 3\text{-}2)$$

When having defined the target projection light power Ptargetl or Ptarget2, the second adjustment unit 42 obtains the Hi voltage value of the voltage DAC 12a that corresponds to the obtained target projection light power Ptargetl or Ptarget2 with reference to the projection light power/voltage value association table T3. Then, the second adjustment unit 42 outputs the output voltage signal that corresponds to the obtained Hi voltage value to the voltage DAC 12a. Note that, when the obtained target projection light power Ptargetl or Ptarget2 does not correspond to any of the projection light power values stored in the projection light power/voltage value association table T3, it is also possible that the second adjustment unit 42 extracts a value stored in the projection light power/voltage value association table T3 that is approximate to the target projection light power, and calculates, using linear interpolation, a Hi voltage value that corresponds to the target projection light power. Furthermore, the second adjustment unit 42 rewrites the projection light power data D1 stored in the storage unit 28 to the obtained Hi voltage value. The light projecting circuit 12 changes the value of a current flowing through the light projecting element 11 based on the output voltage signal that was output from the second adjustment unit 42. Note here that, since the A/D output/projection light power association table T1 is defined so that a ratio of the maximum projection light power to the minimum projection light power is not greater than 2.6, both "condition A" and "condition B" are satisfied by the target projection light power Ptargetl or Ptarget2 being set.

Furthermore, when both the first sensitivity parameter and the second sensitivity parameter are projection light powers, the second adjustment unit 42 acquires the threshold that is stored as the threshold data D3 in the storage unit 28. Then, the second adjustment unit 42 rewrites the A/D output/projection light power association table T1 so that the following "condition C" and "condition D" are satisfied.

"condition C": In the A/D output/projection light power association table T1, the ratio (Vth/Vmin) of the acquired threshold Vth to the minimum received light signal value Vmin (received light signal value Vmin when the light projecting element 11 projects light with the minimum projection light power Pmin that corresponds to the maximum digital value Dmax) for the operation of the operation unit 31 is K2 (%).

"condition D": In the A/D output/projection light power association table T1, the ratio (Vth/Vmax) of the acquired threshold Vth to the maximum received light signal value Vmax (received light signal value Vmax when the light projecting element 11 projects light with the maximum projection light power Pmax that corresponds to the minimum digital value Dmin) for the operation of the operation unit 31 is K1 (%).

The above-described Dmax, Pmin, Dmin, and Pmax are stored in the A/D output/projection light power association table T1. The minimum received light signal value Vmin_current that is set for the operation of the operation unit 31 when a trigger input was received is derived in the following manner. First, the second adjustment unit 42 acquires a received light signal Vcurrent that was received after reception of the trigger input, and a digital value Dcurrent that is output by the A/D converter 31b at that time. Then, the second adjustment unit 42 references the A/D output/projection light power association table T1, and acquires a projection light power Pcurrent that corresponds to the digital value Dcurrent. Vmin_current is calculated based on Formula 4 of Pmin, Pcurrent, and Vcurrent.

$$\text{Vmin\_current} = \text{Vcurrent} * \text{Pmin} / \text{Pcurrent} \ldots \text{(Formula 4)}$$

The maximum received light signal value Vmax_current when a trigger input was received is also calculated by Formula 5 of Pmax, Pcurrent, and Vcurrent although the operation is performed by the operation unit 31.

$$\text{Vmax\_current} = \text{Vcurrent} * \text{Pmax} / \text{Pcurrent} \ldots \text{(Formula 5)}$$

Here, when (Vth/Vmin_current) is greater than K2 (%), the target received light signal value that satisfies "condition C" and is obtained by Vth*100/K2 is Vtarget1. When (Vth/Vmax_current) is less than K1, the target received light signal value that satisfies "condition D" and is obtained by Vth*100/K1 is Vtarget2. Here, the second adjustment unit 42 references the A/D output/projection light power association table T1, and acquires a projection light power Pcurrent that corresponds to Dcurrent. The target projection light powers Ptargetl and Ptarget2 to which the power is to be adjusted by the second adjustment unit 42 can be calculated by the above-described Formulas 3-1 and 3-2.

The second adjustment unit 42 rewrites the projection light power value that correspond to each digital value in the A/D output/projection light power association table T1 to a value that is Ptarget1/Pcurrent-fold or Ptarget2/Pcurrent-fold. Then, the second adjustment unit 42 reads the digital value that is output by the A/D converter 31b. The second adjustment unit 42 references the rewritten A/D output/projection light power association table T1, and obtains the projection light power after adjustment. Then, the second adjustment unit 42 obtains the Hi voltage value of the voltage DAC 12a that corresponds to the obtained projection light power after adjustment with reference to the projection light power/voltage value association table T3. Then, the second adjustment unit 42 outputs the output voltage signal that corresponds to the obtained Hi voltage value to the voltage DAC 12a. Note that, when the projection light power after adjustment does not correspond any of the projection light power values stored in the projection light power/voltage value association table T3, it is possible that the sensitivity parameter adjustment means 25 extracts a value stored in the projection light power/voltage value association table T3 that is approximate to the projection light power after adjustment, and calculates, using linear interpolation, a voltage value that corresponds to the projection light power after adjustment. Furthermore, the second adjustment unit 42 rewrites the projection light power data D1 stored in the storage unit 28 to the obtained Hi voltage value. The light projecting circuit 12 changes the value of a current flowing through the light projecting element 11 based on the output voltage signal that was output from the second adjustment unit 42.

When the first sensitivity parameter is a received light gain in the light receiving means 22, the second adjustment unit 42 acquires the threshold that is stored as the threshold data D3 in the storage unit 28. Also, when the second sensitivity parameter is projection light power, the second adjustment unit 42 defines the received light gain in which the above-described "condition C" and "condition D" are satisfied. When the gain is obtained, the second adjustment unit 42 first calculates, by Formulas 4 and 5, the minimum received light signal value Vmin_current for the operation of the operation unit 31 when a trigger input was received, and the maximum received light signal value Vmax_current for the operation of the operation unit 31 when a trigger input was received. Here, when (Vth/Vmin_current) is greater than K2, the target received light signal value that satisfies "condition C" and is obtained by Vth*100/K2 is Vtarget1. At that time, the second adjustment unit 42 references the A/D output/gain association table T2, and acquires a gain Gcurrent that corresponds to Dcurrent. The target gain Gtargetl to which the gain is to be adjusted by the second adjustment unit 42 can be calculated by the following Formula 6-1.

$$Gtarget1 = Gcurrent * Vtarget / Vmin\_current \ldots (Formula\ 6\text{-}1)$$

Here, when (Vth/Vmax_current) is less than K1, the target received light signal value that satisfies "condition D" and is obtained by Vth*100/K1 is Vtarget2. At that time, the second adjustment unit 42 references the A/D output/gain association table T2, and acquires a gain Gcurrent that corresponds to Dcurrent. The target gain Gtarget2 to which the gain is to be adjusted by the second adjustment unit 42 can be calculated by the following Formula 6-2.

$$Gtarget2 = Gcurrent * Vtarget / Vmax\_current \ldots (Formula\ 6\text{-}2)$$

The second adjustment unit 42 obtains the amplifier output signal that corresponds to the value of the calculated target gain Gtargetl or Gtarget2 with reference to the gain/amplifier output signal association table T4, and outputs the obtained amplifier output signal to the variable gain amplifier 17b. Furthermore, the second adjustment unit 42 rewrites the gain data D2 stored in the storage unit 28 to the target gain Gtargetl or Gtarget2. The light receiving circuit 17 changes the received light gain by changing the amplification factor of the output signal from the light receiving element 16 based on the amplifier output signal output from the second adjustment unit 42. Here, since the A/D output/gain association table T2 is defined so that a ratio of the maximum gain to the minimum gain is not greater than 2.6, both "condition C and "condition D" are satisfied by the calculated target gain Gtargetl or Gtarget2 being set.

Furthermore, when both the first sensitivity parameter and the second sensitivity parameter are gains of received lights, the second adjustment unit 42 acquires the threshold stored as the threshold data D3 in the storage unit 28. Then, the second adjustment unit 42 rewrites the A/D output/gain association table T2 so that the above-described "condition A and "condition B" are satisfied. Specifically, the second adjustment unit 42 derives from Formulas 1 and 2 the minimum received light signal value Vmin_current for the operation of the operation unit 31 when a trigger input was received, and the maximum received light signal value Vmax_current for the operation of the operation unit 31 when the trigger input was received.

Here, when (Vth/Vmin_current) is greater than K2, the target received light signal value that satisfies "condition A" and is obtained by Vth*100/K2 is Vtarget1. At that time, the second adjustment unit 42 references the A/D output/gain association table T2, and acquires a gain Gcurrent that corresponds to Dcurrent. The target gain Gtargetl to which the gain is to be adjusted by the second adjustment unit 42 can be set in the following Formula 7-1.

$$Gtarget1 = Gcurrent * Vtarget / Vmin\_current \ldots (Formula\ 7\text{-}1)$$

When (Vth/Vmax_current) is less than K1, the target received light signal value that satisfies "Condition B" and is obtained by Vth*100/K1 is Vtarget2. Here, the second adjustment unit 42 references the A/D output/gain association table T2, and acquires a gain Gcurrent that corresponds to Dcurrent. The target gain Gtarget2 to which the gain is to be adjusted by the second adjustment unit 42 can be set in the following Formula 7-2.

$$Gtarget2 = Gcurrent * Vtarget / Vmax\_current \ldots (Formula\ 7\text{-}2)$$

The second adjustment unit 42 rewrites the projection light power value that correspond to each digital value of the A/D output/gain association table T2 to a value that is Gtarget1/Gcurrent-fold or Gtarget2/Gcurrent-fold. Then, the second adjustment unit 42 reads the digital value that is output by the A/D converter 31b. The second adjustment unit 42 references the rewritten A/D output/gain association table T2, and obtains the received light gain after adjustment. Then, the second adjustment unit 42 obtains the value of the amplifier output signal that corresponds to the obtained received light gain after adjustment with reference to the gain/amplifier output signal association table T4. Then, the second adjustment unit 42 outputs the obtained amplifier output signal to the variable gain amplifier 17b. Note that, when the obtained received light gain does not correspond any of the gains values stored in the gain/amplifier output signal association table T4, it is also possible that the second adjustment unit 42 extracts a value stored in the gain/amplifier output signal association table T4 that is approximate to the obtained gain, and calculates, using linear interpolation, an amplifier output signal that corresponds to the obtained gain. Furthermore, the second adjustment unit 42 rewrites the gain data D2 stored in the storage unit 28 to the obtained received light gain after adjustment. The variable gain amplifier 17 changes the received light gain by changing the amplification factor of the output signal from the light emitting element 16 based on the amplifier output signal that was output from the second adjustment unit 42.

When the first sensitivity parameter is a threshold, the second adjustment unit 42 defines a threshold after adjustment, and rewrites the threshold data D3 stored in the storage unit 28 to the threshold after adjustment. When the second sensitivity parameter is projection light power, the second adjustment unit 42 rewrites the threshold data D3 so that the above-described "Condition C" and "Condition D" are satisfied. Specifically, the second adjustment unit 42 obtains, by Formulas 4 and 5, the minimum received light signal value Vmin_current for the operation of the operation unit 31 when a trigger input was received, and the maximum received light signal value Vmax_current for the operation of the operation unit 31 when the trigger input was received. Then, when Vth_current/Vmin_current is greater than K2 (%) where Vth_current is a threshold when the trigger input was received, a value that is equal to or lower than Vmin_current*K2/100 is defined as the target threshold Vth_target. Furthermore, when Vth_current/Vmax_current is less than K1 (%), a value that is equal to or greater than Vmax_current*K1/100 is defined as the target threshold Vth_target. When having defined the target threshold Vth_target, the second adjustment unit 42 rewrites the threshold data D3 to the target threshold Vth_target.

When the second sensitivity parameter is a received light gain, the second adjustment unit 42 rewrites the threshold data D3 so that the above-described "condition A" and "condition B" are satisfied. Specifically, the second adjustment unit 42 obtains, by Formulas 1 and 2, the minimum received light signal value Vmin_current for the operation of the operation unit 31when a trigger input was received, and the maximum received light signal value Vmax_current for the operation of the operation unit 31 when the trigger input was received. Then, assuming that the threshold when the trigger input was received is Vth_current, a value that is equal to or lower than Vmin_current*K2/100 is defined as the target threshold Vth_target when Vth_current/Vmin_current is greater than K2 (%). Furthermore, a value that is equal to or greater than Vmax_current*K1/100 is defined as the target threshold Vth_target when Vth_current/Vmax_current is less than K1 (%). When having defined the target threshold Vth_target, the second adjustment unit 42 rewrites the threshold data D3 to the target threshold Vth_target.

As shown in Fig. 12, the indicator 33 includes an operation indicating lamp 33a, a transistor 33b, a fixed power supply 33c, a resistor 33d, and a ground 33e. It is also possible that the fixed power supply 12c, 17d, or 31c serves also as the fixed power supply 33c. Furthermore, it is also possible that the ground 12e or 31d serves also as the ground 33e. As shown in Fig. 12, the operation indicating lamp 33a is, for example, a light emitting diode. The anode of the operation indicating lamp 33a is connected to the fixed power supply 12c. The cathode of the operation indicating lamp 33a is connected to the collector of the transistor 33b. The sensitivity parameter adjusting means 25 is connected to the base of the transistor 33b. One end of the resistor 33d for preventing an excess current is connected to the emitter of the transistor 12b. The other end of the resistor 33d is connected to the ground 33e. That is, the other end of the resistor 33d is earthed. The determination means 23 outputs, to the base of the transistor 33b, an indicator ON signal, which is a signal for turning ON the indicator in either case of when it is determined that the received light signal value is the threshold or greater, or when it is determined that the received light signal value is the threshold or lower. Furthermore, the determination means 23 outputs, to the base of the transistor 33b, an indicator OFF signal, which is a signal for turning OFF the indicator in the other case of when it is determined that the received light signal value is the threshold or greater and when it is determined that the received light signal value is the threshold or lower. The operation indicating lamp 33a is lighted when, for example, the indicator ON signal has a voltage of the power supply voltage Vcc and the voltage is applied to the base of the transistor. The operation indicating lamp 33a stops emitting light when, for example, the indicator OFF signal has a voltage of 0V and the voltage is applied to the base of the transistor. The indicator 33 is a mountain-shaped member that protrudes in the direction in which the detection light A travels. As shown in Fig. 4, the indicator 33 is arranged at a position that is closer to the light projecting/receiving section 10 than the operation unit 31 is. The operation unit 31, the trigger input reception unit 32, and the indicator 33 have the above-described positional relationship, and the indicator 33 is not easily hidden by the hand of an operator when the operator presses the trigger input reception unit 32 because the operator ordinarily performs an adjustment operation while standing at a position other than that in front of the light projecting/receiving section 10.

After having set the first and second sensitivity parameters, the operator confirms that the operation indicating lamp is turned on in either case of when the detection object 6 is present or when the detection object 6 is not present, and that the operation indicating lamp is turned off in the other case. With this, it is possible for the operator to determine whether or not the second sensitivity parameter set by the operation unit 31 is an appropriate value.

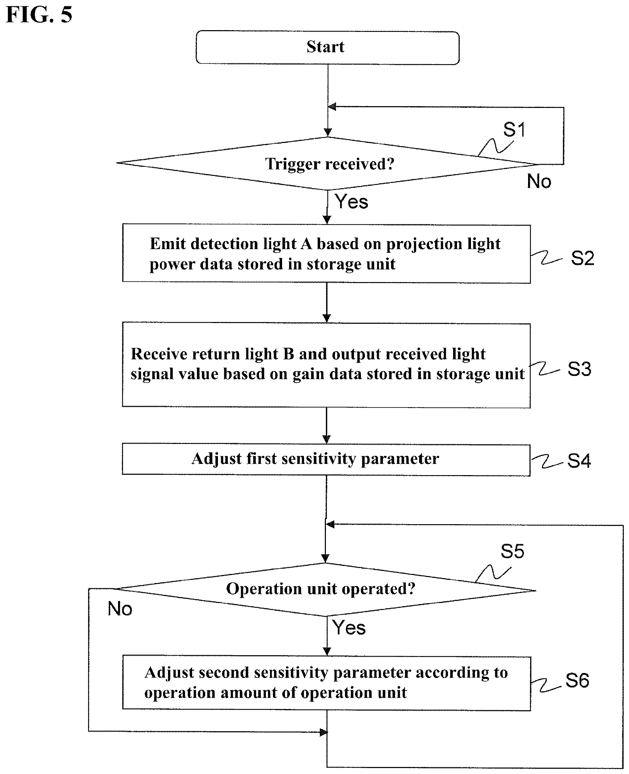

Hereinafter, the sensitivity adjustment operation of the photoelectric sensor 1 according to the first embodiment will be described in detail. Fig. 5 is a flowchart illustrating the sensitivity adjustment operation of the photoelectric sensor 1 according to the present embodiment. First, the operator presses the trigger input reception unit 32 in a state in which the detection object 6 is not present in the detection region. At that time, the operation member 31e is set at the initial position. The second adjustment unit 42 determines whether or not the trigger input reception unit 32 has been pressed (step S1). If it is determined that the trigger input reception unit 32 has not been pressed (No, in step S1), the second adjustment unit 42 stands by until the trigger input reception unit 32 is pressed (return to step S1).

If the trigger input was received (Yes, in step S1), the light projecting means 21 emits the detection light A based on the projection light power data D1 stored in advance in the storage unit 28 (step S2). Then, the light receiving means 22 receives the return light B. The light receiving means 22 outputs a received light signal value Vcap based on the gain data D2 stored in advance in the storage unit 28 (step S3).

Then, in step S4, the sensitivity parameter adjusting means 25 (second adjustment unit 42) adjusts the first sensitivity parameter using the received light signal value Vcap. As described above, the first sensitivity parameter that is adjusted here refers to at least one of the projection light intensity (projection light power) of the detection light A, the gain of the received light amount (received light gain) in the light receiving means 22, and the threshold Vth. A method for adjusting the first sensitivity parameters is as described above.

After step S4, the received light signal adjustment means 24 (first adjustment unit 41) detects whether or not the operator has operated the operation unit 24 (step S5 in FIG. 5B). Specifically, the first adjustment unit 41 reads, in a predetermined cycle, the digital value that corresponds to the voltage value that is input into the A/D converter 31b, and detects whether or not the resistance value of the variable resistor 31a has varied. With this, the first adjustment unit 41 detects whether or not the position of the operation unit 31 has been varied from the initial position (in the example of FIG. 4, the position "OFF") when the trigger input reception unit 32 is pressed.

When the operation unit 24 has been operated (Yes in step S5), the first adjustment unit 41 reads an operation amount of the operation unit 24. Then, the first adjustment unit 41 adjusts the second sensitivity parameter based on the operation amount of the operation unit 24 (step S6). A method for adjusting the second sensitivity parameter as well is as described above.

Note that the first adjustment unit 41 can also process projection light power and received light gain together. Furthermore, the second adjustment unit 42 can also process projection light power, a received light gain, and a threshold together. For example, it is also possible that the first adjustment unit 41 obtains a Hi voltage value serving as the projection light power that is the closest to the target received light signal value Vtarget with reference to the projection light power/voltage value association table T3, and adjusts first the projection light power. Then, it is also possible that the first adjustment unit 41 obtains the target received light signal value Vtarget by performing fine adjustment using the received light gain. When the procedure in step S6 ends, the procedure returns to step S5. Then, the procedures in steps S5 and S6 are repeated.

Second Embodiment

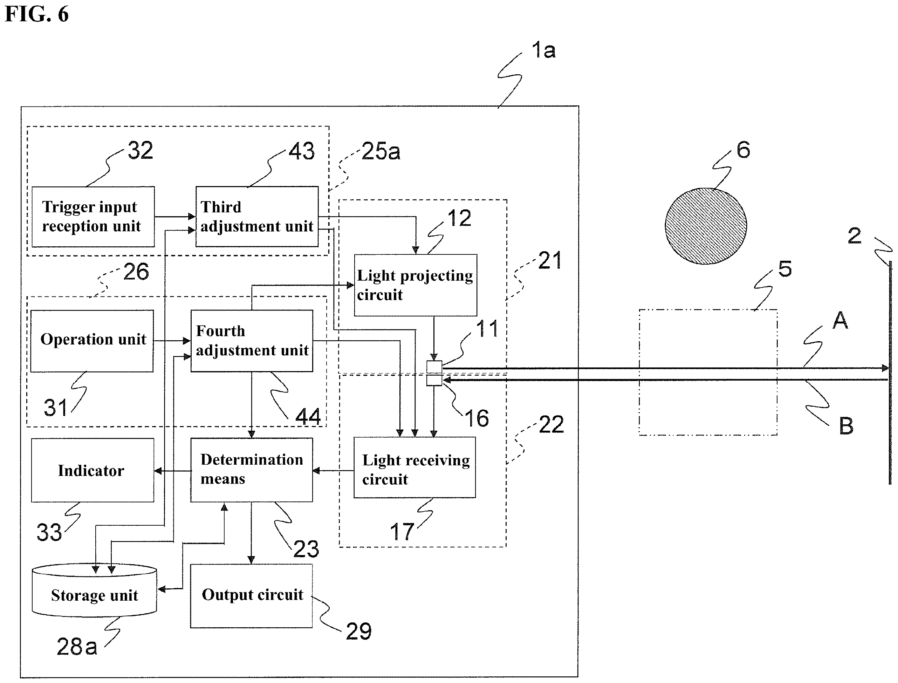

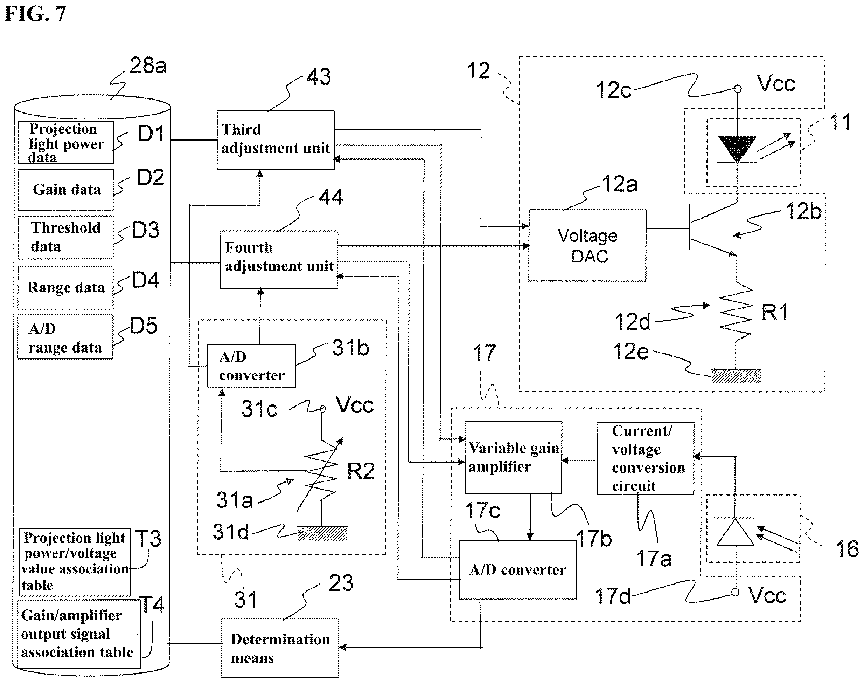

The first embodiment has described the case where a sensitivity parameter other than a threshold Vth is adjusted by the operation unit 24. In a photoelectric sensor 1a according to a second embodiment, the threshold Vth is adjusted by the operation unit 24. FIG. 6 is a diagram illustrating overall configuration of the photoelectric sensor 1a according to the second embodiment. As shown in FIG. 6, the photoelectric sensor 1a includes the light projecting means 21, the light receiving means 22, the determination means 23, a sensitivity parameter adjustment means 25a, the threshold adjustment means 26, the storage unit 28a, the output circuit 29, and the indicator 33. The sensitivity parameter adjustment means 25a includes the trigger input reception unit 32 and a third adjustment unit 43. The threshold adjustment means 26 includes the operation unit 31 and a fourth adjustment unit 44. FIG. 7 is a diagram illustrating detailed configurations of the light projecting means 21, the light receiving means 22, the third adjustment unit 43, the fourth adjustment unit 44, the determination means 23, and the storage unit 28a according to the second embodiment. In FIGS. 6 and 7, the same reference numerals as the first embodiment are given to the same configuration as those of the photoelectric sensor 1 according to the first embodiment, and detailed descriptions thereof are omitted.

In contrast to the storage unit 28 of the first embodiment, the storage unit 28a does not include the A/D output/projection light power association table T1 and the A/D output/gain association table T2 but has additionally stored therein A/D range data D5. The A/D range data D5 includes data on the maximum value Vdegmax of the A/D converter 17c, and data on the minimum value Vdegmin thereof. The A/D range data D5 is predetermined and stored in the storage unit 28a. The A/D range data D5 is referenced by the third adjustment unit 43.

The trigger input reception unit 32 is a button that is pressed by an operator when he or she starts adjustment by the sensitivity parameter adjustment means 25a. The trigger input reception unit 32 receives a trigger input for causing the third adjustment unit 43 to execute a sensitivity parameter adjustment operation, which will be described later. That is, when the trigger input reception unit 32 has received a trigger input, the sensitivity parameter adjustment means 25a executes the sensitivity parameter adjustment operation by the third adjustment unit 43. The trigger input reception unit 32 is pressed after the operation unit 31 is set at a predetermined position (for example, the position "OFF") in the state in which the detection object 6 is not present in the detection region 5.

When the trigger input reception unit 32 has received a trigger input, the third adjustment unit 43 adjusts projection light power or a received light gain so that a received light signal value is a predetermined standard signal value in a state in which the detection object 6 is not present in the detection region 5. This standard signal value is selected in a range in which amplification and A/D conversion by the light receiving means 22 do not saturate and the received light signal value varies according to a received light amount. Preferably, the standard signal value is selected in a range between 50% and 70% of the maximum value of A/D conversion output. Here, the sensitivity parameter that is adjusted by the third adjustment unit 43 is referred to as "third sensitivity parameter". Operations of the third adjustment unit 43 with respect to the light projecting means 21, the light receiving means 22, and the storage unit 28 are the same as the operations of the second adjustment unit 42 with respect to the light projecting means 21, the light receiving means 22, and the storage unit 28, excluding that a threshold is not adjusted.

In this case, the third adjustment unit 43 adjusts the third sensitivity parameter so that the following condition (3) is satisfied. In other words, the third adjustment unit 43 adjusts the received light signal value to a standard signal value that satisfies the following condition (3).

(3) An adjustment range of the fourth adjustment unit 44 is a range that is included between 50% and 130% in terms of a ratio of the threshold to the received light signal value.

Note that it is more preferable that the adjustment range of the fourth adjustment unit 44 in the condition (3) be between 70% and 110%, because it is easy for an operator to perform fine adjustment. Here, data for defining the above-described range included between 50% and 130% or the like is stored as the range data D4 in the storage unit 28. The range data D4 includes a lower limit value K1 (%) and an upper limit value K2 (%). The range data D4 is stored as a predetermined value in the storage unit 28. The range data D4 is referenced by the third adjustment unit 43.

The third adjustment unit 43 obtains a received light signal value after adjustment in which the above-described condition (3) is satisfied. Then, the third adjustment unit 43 acquires a received light signal value Vcurrent that was received after reception of a trigger input, and a digital value Dcurrent that is output by the A/D converter 31b at that time.

Then, the third adjustment unit 43 determines whether or not a range of the received light signal value Vcurrent between Vcurrent*K1/100 and Vcurrent*K2/100 is included between the maximum value Vdegmax and the minimum value Vdegmin of the A/D converter 17c. If Vcurrent*K1/100 is less than Vdegmin, the target received light signal value Vtarget that is Vdegmin*K1/100 or greater.

When the third sensitivity parameter is projection light power, the third adjustment unit 43 references the projection light power data D1 and the projection light power/voltage value association table T3, and acquires a current projection light power Pcurrent. The target projection light power Ptarget to which the power is to be adjusted by the third adjustment unit 43 can be set by the following Formula 8.

$$\text{Ptarget} = \text{Pcurrent} * \text{Vtarget} / \text{Vcurrent} \dots \text{(Formula 8)}$$

When having defined the target projection light power Ptarget, the third adjustment unit 43 obtains a Hi voltage value of the voltage DAC 12a that corresponds to the target projection light power Ptarget with reference to the projection light power/voltage value association table T3. Then, the third adjustment unit 43 outputs an output voltage signal that corresponds to the obtained Hi voltage value to the voltage DAC 12a. Note that, when the projection light power after adjustment does not corresponds any of the projection light power values stored in the projection light power/voltage value association table T3, it is also possible that the third adjustment unit 43 extracts a value stored in the projection light power/voltage value association table T3 that is approximate to the projection light power after adjustment, and calculates, using linear interpolation, a voltage value that corresponds to the projection light power after adjustment. Furthermore, the third adjustment unit 43 rewrites the projection light power data D1 stored in the storage unit 28 to the Hi voltage value. The light projecting circuit 12 changes the value of a current flowing through the light projecting element 11 based on the output voltage signal that was output from the third adjustment unit 43.

When the third sensitivity parameter is a received light gain, the third adjustment unit 43 references the gain data D2, and acquires a current received light gain Gcurrent. A target received light gain Gtarget to which the gain is to be adjusted by the third adjustment unit 44 can be set by the following Formula 9.

$$Gtarget = Gcurrent * Vtarget / Vcurrent \ldots (Formula\ 9)$$

The third adjustment unit 43 obtains an amplifier output signal that corresponds to the calculated value of the target gain Gtarget with reference to the gain/amplifier output signal association table T4, and outputs the obtained amplifier output signal to the variable gain amplifier 17b. Note that, when the target gain Gtarget does not correspond to any of the gain values stored in the gain/amplifier output signal association table T4, it is also possible that the third adjustment unit 43 extracts a value stored in the gain/amplifier output signal association table T4 that is approximate to the target gain Gtarget, and calculates, using linear interpolation, an amplifier output signal that corresponds to the obtained gain. Furthermore, the third adjustment unit 43 rewrites the gain data D2 stored in the storage unit 28 to the target gain Gtarget. The light receiving circuit 17 changes the received light gain by changing the amplification factor of the output signal from the light receiving element 16 based on the amplifier output signal that was output from the third adjustment unit 43.

In the operation unit 31, an adjustment range of the sensitivity parameter is defined in advance so that fine adjustment of the sensitivity parameter by an operator is possible. Here, a movable range of the operation unit 31 is referred to as an operable range. That is, the position of the operation unit 31 can be operated in the operable range. In the example of FIG. 4, the range from the shown position "OFF" to the position "3" is the operable range. In the present embodiment, the sensitivity parameter that is adjusted in a predetermined adjustment range by the operation unit 31 being operated is referred to as "fourth sensitivity parameter. The fourth sensitivity parameter is a threshold. The third sensitivity parameter and the fourth sensitivity parameter are different sensitivity parameters.

The fourth adjustment unit 44 varies the threshold in a range that is included between 50% and 130% in terms of a ratio of the threshold to a standard signal value by an operation of the operation unit 31 from one end (the position "OFF") to the other end (the position "3") of the operable range. That is, the threshold when the indicating section 31b of the operation unit 31 is directed to the position "OFF" is minimum of thresholds obtained by the operation unit 31 being operated in the operable range. This threshold is referred to as the minimum threshold. Furthermore, the threshold when the indicating section 31b of the operation unit 31 is directed to the position "3" is maximum of thresholds obtained by the operation unit 31 being operated in the operable range. This threshold is referred to as the maximum threshold. The minimum threshold corresponds to 50% of the above-described standard signal value. The maximum threshold corresponds to 130% of the above-described standard signal value.

Note that it is preferable that the fourth adjustment unit 44 vary the threshold in a range that is included between 70% and 110% in terms of a ratio of the threshold to the received light signal value. In this case, the minimum threshold corresponds to 70% of the above-described standard signal value. The maximum threshold corresponds to 110% of the above-described standard signal value.

When the operation unit 31 is operated after reception of the trigger input by the trigger input reception unit 32, the fourth adjustment unit 44 obtains a threshold after adjustment so that the ratio corresponds to the position to which the indicating section 31b of the operation unit 31 is directed, based on the received light signal value after adjustment that was adjusted by the third adjustment unit 43. Then, the fourth adjustment unit 44 rewrites the threshold data D3 stored in the storage unit 28 to the threshold after adjustment. Operations of the fourth adjustment unit 44 with respect to the light projecting means 21, the light receiving means 22, and the storage unit 28 differ from the operations of the first adjustment unit 41 with respect to the light projecting means 21, the light receiving means 22, and the storage unit 28 in that not a received light gain and projection light power but only a threshold is adjusted. However, other operations of the fourth adjustment unit 44 are the same as those of the first adjustment unit 41. Accordingly, referring to FIG. 7, the fourth adjustment unit 44 neither outputs an output voltage signal to the voltage DAC, nor outputs an amplifier output signal to the variable gain amplifier 17b.

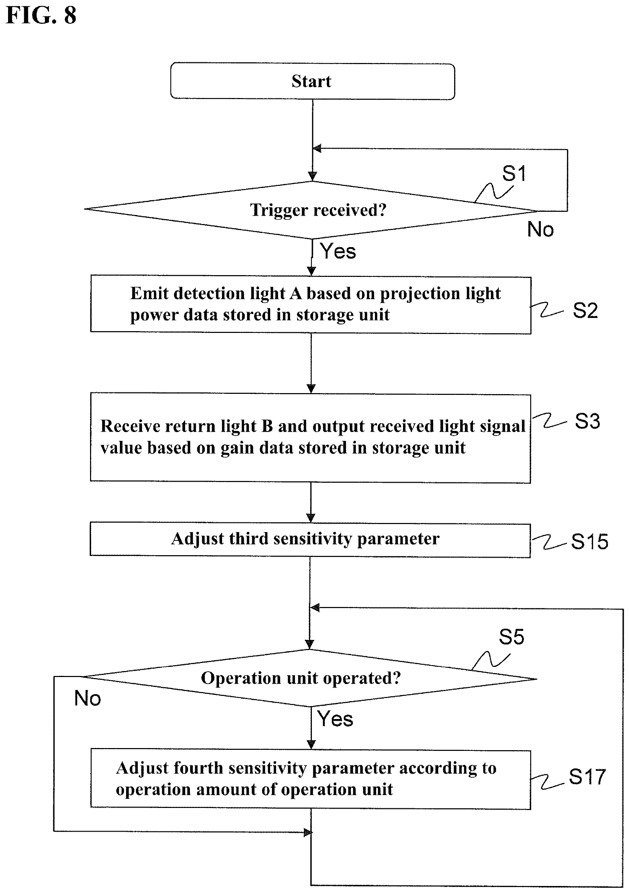

Hereinafter, a sensitivity adjustment operation of the photoelectric sensor 1a according to the second embodiment will be described in detail. FIG. 8 is a flowchart of the sensitivity adjustment operation of the photoelectric sensor 1a according to the present embodiment. In FIG. 8, the same reference numerals are given to the same procedures in FIG. 5, and detailed descriptions thereof are omitted.

In step S15 of FIG. 8, the sensitivity parameter adjustment means 25a (third adjustment unit 43) adjusts, based on the received light signal value Vcurrent, the third sensitivity parameter so that the received light signal value after adjustment is the above-described signal value Vtarget. As described above, the third sensitivity parameter that is adjusted here refers to a projection light intensity (projection light power) of the detection light A, or a received light gain (received light gain) of the light receiving means 22. An adjustment method of the third adjustment unit 43 is as described above.

Then, when the operation member 31e has been operated (Yes in step S5), the fourth adjustment unit 44 reads an operation amount of the operation member 31e. Then, the fourth adjustment unit 44 adjusts the fourth sensitivity parameter according to the operation amount of the operation member 31e (step S17). An adjustment method of the fourth adjustment unit 44 is as described above.

The procedures from step S17 onward are the same as those in the first embodiment. That is, the procedure returns to step S5, and the procedures of steps S5 and S17 are repeated.

Effects

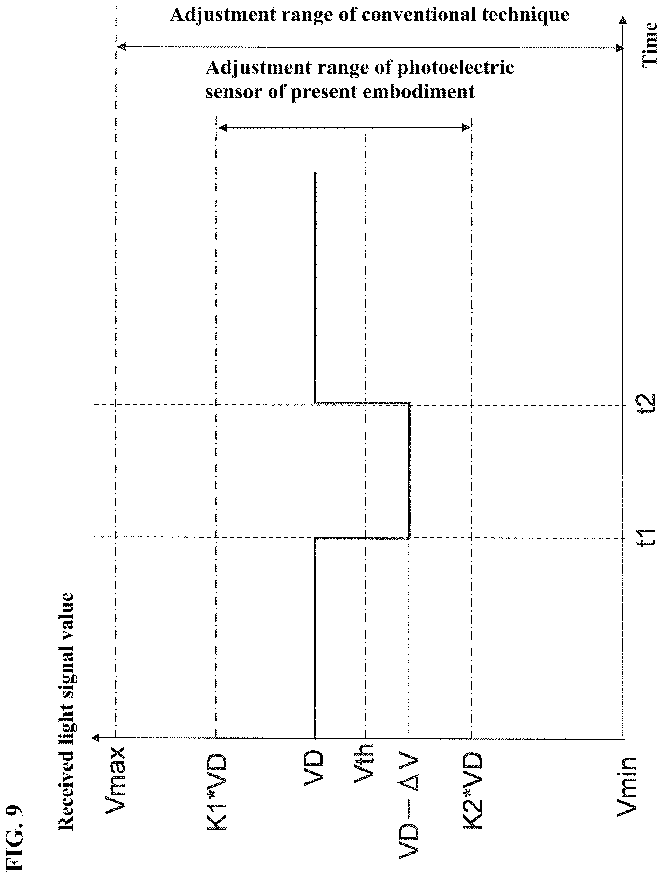

Hereinafter, effects of the photoelectric sensors 1 and 1a according to the first and second embodiments will be described. FIG. 9 is a diagram illustrating an effect of the photoelectric sensor 1 according to the first embodiment. In FIG. 9, a received light signal value after adjustment when the detection object 6 is not present in the detection region 5 is denoted by "VD" (VD corresponds to Vdes2 in the first embodiment, and to Vdes3 in the second embodiment), and a signal when the detection object 6, such as a transparent object, passes through the detection region 5 from time t1 to time t2 is denoted in a heavy line. When, for example, the detection object 6 is a transparent object, a received light signal value $\Delta V$ that is a reduction caused by the detection object 6 passing through is low. In the present embodiment, the first sensitivity parameter and the third sensitivity parameter are reliably adjusted by the second adjustment unit 42 or the third adjustment unit 43 so that a ratio of the threshold Vth to the received light signal value VD that is adjusted by the first adjustment unit 41 or the fourth adjustment unit 44 is in a range between K2 and K1 (where K1 is 0.5 or greater and K2 is 1.3 or lower). The reason why the range between K1 and K2 is set is that the inventor of the present invention found that adjustment for detecting a transparent object is possible in this range. Accordingly, the photoelectric sensors 1 and 1a can reliably detect a transparent object. An adjustment range of the conventional technique is typically adjusted in a range from the lower limit value Vmin to the upper limit value Vmax of the sensitivity adjustment means of the light projecting circuit 12 or the light receiving circuit 17, and thus the adjustment range of the sensitivity potentiometer is large. Accordingly, an amount of variation in the sensitivity parameter per unit of rotational angle of the sensitivity potentiometer is large. Therefore, it is difficult to perform fine adjustment of a sensitivity parameter using the sensitivity potentiometer. On the other hand, the adjustment range of the photoelectric sensors 1 and 1a according to the embodiments is limited to a range between K1 (%) and K2 (%). It is preferable that the adjustment range is limited to a range in which K1 is 70% and K2 is 110%. Therefore, assumed that the operable range is the same range as that of the conventional sensitivity potentiometer, an amount of variation in the sensitivity parameter per unit of rotational angle of the operation unit 24 is reduced as compared to the conventional case. Accordingly, as shown in FIG. 9, it is easy to perform fine adjustment of a sensitivity parameter by the operation unit 24 such that the threshold Vth is set between VD and VD-$\Delta V$.

Modification

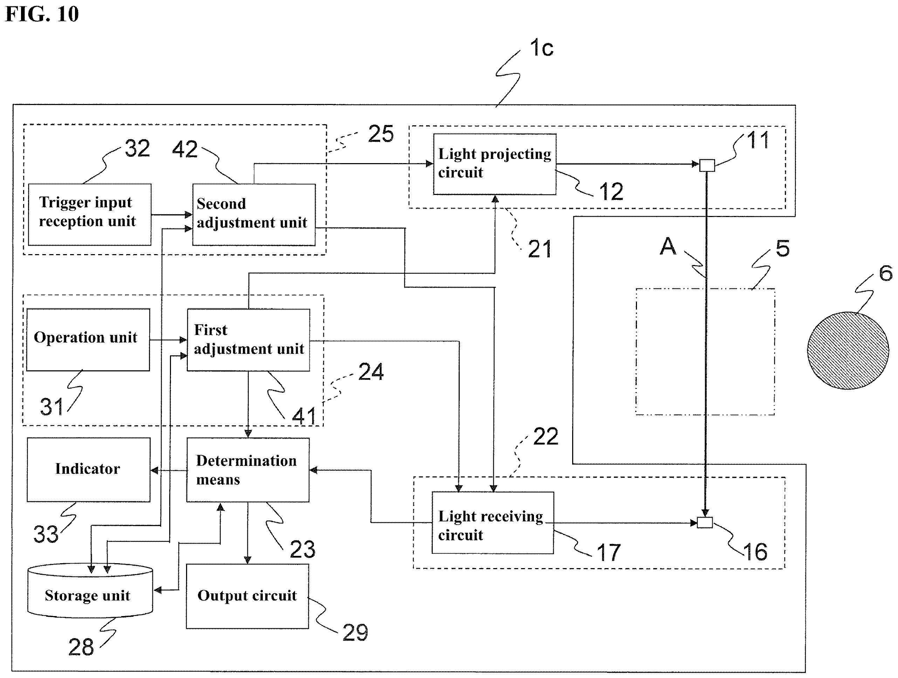

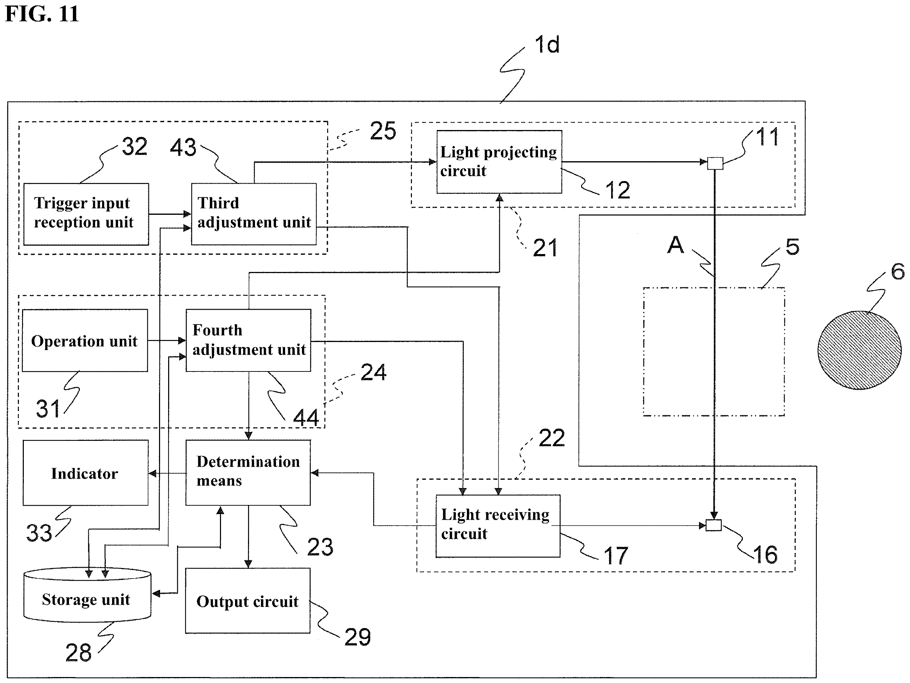

The present invention is also applicable to a transmissive photoelectric sensor. FIG. 10 shows a modification 1c of the photoelectric sensor according to the first embodiment. FIG. 11 is a modification 1d of the photoelectric sensor according to the second embodiment. The photoelectric sensors 1c and 1d are not used in combination with the retro-reflective member 2. In the photoelectric sensors 1c and 1d, the light receiving means 22 directly receives detection light A that was emitted by the light projecting means 21 and passed through the detection region 5. Other configurations and operations of the photoelectric sensors 1c and 1d are the same as those of the respective photoelectric sensors 1 and 1a. Note that, although the present modifications 1c and 1d show the transmissive photoelectric sensor in which the light projecting device and the light receiving device is incorporated into one component, the present invention is also applicable to a transmissive photoelectric sensor in which the light projecting device and the light receiving device are separated from each other. Furthermore, it is also possible that the photoelectric sensors 1c and 1d are fiber photoelectric sensors that further include a light fiber for a transmission device that guides the detection light emitted from the light projecting element 11 to a predetermined position, and a light fiber for a light receiving device that receives light emitted from the light fiber for a transmission device and guides the received light to the light receiving element 16.

In the photoelectric sensors 1 and 1a according to the first and second embodiments, when the detection light A passes by the detection object 6, detection light A that passed by the detection object 6 twice is obtained. Therefore, even when the detection object 6 is an object such as a transparent object whose light attenuation rate is low, attenuation of the detection light A is large. On the other hand, in the photoelectric sensors 1b and 1c according to the modifications, detection light A passes by the detection object 6 only one time. Accordingly, attenuation of the detection light A is reduced to about half of the attenuation in the photoelectric sensors 1 and 1a according to the first and second embodiments. Accordingly, the received light signal value $\Delta V$ shown in FIG. 9 that is a reduction caused by the detection object 6 passing through further decrease. However, adjustment ranges of the photoelectric sensors 1 and 1a are restricted to a range between K2 and K1 (where K1 is 0.5 or greater and K2 is 1.3 or lower). Thus, even when the value of $\Delta V$ has decreased, it is possible to perform fine adjustment of a sensitivity parameter by the operation unit 24 in which a threshold Vth is set between VD and VD-$\Delta V$.

Moreover, the present invention is also applicable to so-called coaxial retro-reflective photoelectric sensor that includes a lens for condensing detection light A in the detection region 5, in which the detection light A and return light B pass through the lens. In this case, a half mirror may also be provided between the lens and the light projecting element 11. Furthermore, a separate optical system for guiding light, such as a lens, a mirror, or a prism may also be provided between the half mirror and the light receiving element 16.

The operation panel 30 is not limited to that as shown in FIG. 4. For example, it is also possible that the scale 31c is not indicated with "OFF", "1", "2", and "3", but in a ratio of the threshold to the received light signal value. Furthermore, a predetermined position of the operation unit 31 when the trigger input reception unit 32 is pressed is not limited to the position at which the ratio is minimum (the position "OFF"), but may be the position at which the ratio is 100%, or the position at which the ratio is maximum (the position "3" in FIG. 4).

The trigger input reception unit 32 may be another operation member such as a switch. Furthermore, the trigger input reception unit 32 may be omitted. In this case, the second sensitivity parameter adjusting means 25 may be activated by, for example, an command from an external device that is connected to the outside of the photoelectric sensor 1 (for example, a PC or the like) so as to adjust the sensitivity parameter.

Furthermore, it is also possible to notify the operator, using another communication means such as sound notification means instead of the indicator 33, of the state of the received light signal value or of whether or not the detection object 6 can be reliably detected. Furthermore, instead of turning on the light in a different color, the indicator 33 may also change the flashing speed, move, e.g., rotate a light emitting element, or display a message on a display screen so as to notify an operator of the state of the received light signal value or of whether or not the detection object 6 can reliably detected.

Note that all or part of the functional blocks (including, for example, the determination means 23, the first adjustment unit 41, the second adjustment unit 42, the third adjustment unit 43, and the fourth adjustment unit 44) according to the above-described embodiments may be realized by a CPU interpreting and executing program data that is stored in a storage device (such as a ROM, a RAM, or a hard disk) and can execute the above-described procedures. In this case, the program data may be installed into the storage device via a recording medium or directly executed on the recording medium. Note that "recording medium" refers to a semiconductor memory such as a ROM, a RAM, or a flash memory, a magnetic disc memory such as a flexible disk or a hard disk, an optical disk memory such as a CD-ROM, a DVD, or a BD, a memory card, or the like. Furthermore, the recording medium is a concept that includes a communication medium, such as a telephone line or a carrier pass, as well.

Moreover, all or part of the functional blocks (including, for example, the determination means 23, the first adjustment unit 41, the second adjustment unit 42, the third adjustment unit 43, and the fourth adjustment unit 44) according to the above-described embodiments may typically be realized as an integrated circuit LSI (referred to as an IC, a system LSI, a super LSI, or a ultra LSI, or the like, depending on the integration degree). All or part of the functional blocks may individually be formed as one chip, or formed so as to be included in one chip. Furthermore, a method for integrating circuits is not limited to a method of LSI, and may be realized by a method of a dedicated circuit or a general-purpose processor. Furthermore, a Field Programmable Gate Array (FPGA) that is programmable after manufacturing the LSI, or a reconfigurable processor that is a processor capable of reconfiguring connection or setting of circuit cells in the LSI circuit.

Industrial applicability

According to the present invention, it is possible to provide a photoelectric sensor that makes fine adjustment of a sensitivity parameter easy.

LIST OF REFERENCE NUMERALS

| | |
|---|---|
| 1, 1a, 1b, 1c | Photoelectric sensor |
| 2 | Retro-reflective member |
| 5 | Detection region |
| 6 | Detection object |
| 21 | Light projecting means |
| 22 | Light receiving means |
| 23 | Determination means |
| 24 | Received light signal adjustment means |
| 25 | Sensitivity parameter adjustment means |
| 26 | Threshold adjustment means |
| 31 | Operation unit |

| 32 | Trigger input reception unit |
|----|----|
| 41 | First adjustment unit |
| 42 | Second adjustment unit |
| 43 | Third adjustment unit |
| 44 | Fourth adjustment unit |

**Claims**

1. A photoelectric sensor (1; 1a; 1b; 1c) that is a transmissive photoelectric sensor or a retro-reflective photoelectric sensor for use in combination with a retro-reflective member (2), comprising:

   light projecting means (21) configured to emit detection light for detecting a detection object (6) that is present in a detection region (5);
   light receiving means (22) configured to receive the detection light from the detection region (5);
   determination means (23) configured to determine whether or not the detection object (6) is present by comparing a received light signal value, which is an output signal value of the light receiving means (22), with a threshold;
   received light signal adjustment means (24) that includes an operation unit (31) having an operable range within which the operation unit (31) is configured to be operated to adjust at least one sensitivity parameter of projection light power and received light gain within a predetermined range, and a first adjustment unit (41) configured to adjust, by an operation of the operation unit (31) from one end to the other of the operable range, the at least one sensitivity parameter so that a ratio of the maximum value to the minimum value of the received light signal value is not greater than 2.6; and
   sensitivity parameter adjustment means (25) that includes a trigger input reception unit (32), and a second adjustment unit (42) configured to adjust at least one of the projection light power, the received light gain, and the threshold when the trigger input reception unit (32) receives a trigger input while the operation unit (31) is located at a predetermined position in a state in which the detection object (6) is not present in the detection region (5),
   wherein the second adjustment unit (42) is configured to adjust at least one of the projection light power, the received light gain, and the threshold so that the threshold is between the maximum value and the minimum value of the received light signal value, and so that the first adjustment unit (41) comprises an adjustment range being a predetermined range that is included between 50% and 130% in terms of a ratio of the threshold to the received light signal value.

2. A photoelectric sensor (1; 1a; 1b; 1c) that is a transmissive photoelectric sensor or a retro-reflective photoelectric sensor for use in combination with a retro-reflective member (2), comprising:

   light projecting means (21) configured to emit detection light for detecting a detection object (6) that is present in a detection region (5);
   light receiving means (22) configured to receive the detection light from the detection region (5);
   determination means (23) configured to determine whether or not the detection object (6) is present by comparing a received light signal value, which is an output signal value of the light receiving means (22), with a threshold;
   sensitivity parameter adjustment means (25) that includes a trigger input reception unit (32), and an adjustment unit (43) configured to adjust, when the trigger input reception unit (32) receives a trigger input in a state in which the detection object (6) is not present in the detection region (5), at least one sensitivity parameter of projection light power and received light gain so that the received light signal value is a predetermined standard signal value; and
   threshold adjustment means (26) that includes an operation unit (31) having an operable range within which the operation unit (31) is configured to be operated, and another adjustment unit (44) configured to vary, by an operation of the operation unit (31) from one end to the other of the operable range, the threshold in a predetermined range that is included between 50% and 130% in terms of a ratio of the threshold to the standard signal value.

3. The photoelectric sensor (1; 1a; 1b; 1c) according to claim 1 or 2, wherein the predetermined range is between 70% and 110%.

4. The photoelectric sensor (1; 1a; 1b; 1c) according to any one of claims 1 to 3, wherein the operation unit (31) includes a rotatable member.

**Patentansprüche**

1. Photoelektrischer Sensor (1; 1a; 1b; 1c), der ein transmissiver photoelektrischer Sensor oder ein retroreflektierender photoelektrischer Sensor zur Verwendung in Kombination mit einem retroreflektierenden Element (2) ist, umfassend:

   eine Lichtprojektionseinrichtung (21), die geeignet ist, Erfassungslicht zum Erfassen eines Erfassungsobjekts (6), das in einem Erfassungsbereich (5) vorhanden ist, zu emittieren;
   eine Lichtempfangseinrichtung (22), die geeignet ist, das Erfassungslicht von dem Erfassungsbereich (5) zu empfangen;
   ein Bestimmungseinrichtung (23), die geeignet ist, zu bestimmen, ob das Erfassungsobjekt (6) vorhanden ist oder nicht, indem sie einen Empfangslichtsignalwert, der ein Ausgangssignalwert der Lichtempfangseinrichtung (22) ist, mit einem Schwellenwert vergleicht;
   eine Empfangslichtsignal-Einstelleinrichtung (24), die eine Betriebseinheit (31) mit einem Betriebsbereich, innerhalb dessen die Betriebseinheit (31) geeignet ist, betrieben zu werden, um mindestens einen Empfindlichkeitsparameter der Projektionslichtleistung und eine empfangene Lichtverstärkung innerhalb eines vorbestimmten Bereichs einzustellen, und eine erste Einstelleinheit (41) umfasst, die geeignet ist, durch einen Betrieb der Betriebseinheit (31) von einem Ende des Betriebsbereichs zu dem anderen Ende des Betriebsbereichs den mindestens einen Empfindlichkeitsparameter so einzustellen, dass ein Verhältnis des Maximalwerts zu dem Minimalwert des Empfangslichtsignalwerts nicht größer als 2,6 ist; und
   eine Empfindlichkeitsparameter-Einstelleinrichtung (25), die eine Auslösereingangsempfangseinheit (32) und eine zweite Einstelleinheit (42) umfasst, die geeignet ist, zumindest entweder die Projektionslichtleistung, die empfangene Lichtverstärkung oder den Schwellenwert einzustellen, wenn die Auslösereingangsempfangseinheit (32) ein Auslösereingangssignal empfängt, während sich die Betriebseinheit (31) an einer vorbestimmten Position in einem Zustand befindet, in dem sich das Erfassungsobjekt (6) nicht im Erfassungsbereich (5) befindet, wobei die zweite Einstelleinheit (42) geeignet ist, zumindest die Projektionslichtleistung, die empfangene Lichtverstärkung und/oder den Schwellwert so einzustellen, dass der Schwellwert zwischen dem Maximalwert und dem Minimalwert des Empfangslichtsignalwerts liegt, und so, dass die erste Einstelleinheit (41) einen Einstellbereich umfasst, der ein vorbestimmter Bereich ist, der zwischen 50% und 130% in Bezug auf ein Verhältnis des Schwellwertes zu dem Empfangslichtsignalwert enthalten ist.

2. Photoelektrischer Sensor (1; 1a; 1b; 1c), der ein transmissiver photoelektrischer Sensor oder ein retroreflektierender photoelektrischer Sensor zur Verwendung in Kombination mit einem retroreflektierenden Element (2) ist, umfassend:

   eine Lichtprojektionseinrichtung (21), die geeignet ist, Erfassungslicht zum Erfassen eines Erfassungsobjekts (6), das in einem Erfassungsbereich (5) vorhanden ist, zu emittieren;
   eine Lichtempfangseinrichtung (22), die geeignet ist, das Erfassungslicht von dem Erfassungsbereich (5) zu empfangen;
   ein Bestimmungseinrichtung (23), die geeignet ist, zu bestimmen, ob das Erfassungsobjekt (6) vorhanden ist oder nicht, indem sie einen Empfangslichtsignalwert, der ein Ausgangssignalwert der Lichtempfangseinrichtung (22) ist, mit einem Schwellenwert vergleicht;
   eine Empfindlichkeitsparameter-Einstelleinrichtung (25), die eine Auslösereingangsempfangseinheit (32) und eine Einstelleinheit (43) umfasst, die geeignet ist, wenn die Auslösereingangsempfangseinheit (32) einen Auslösereingang in einem Zustand empfängt, in dem das Erfassungsobjekt (6) nicht in dem Erfassungsbereich (5) vorhanden ist, mindestens einen Empfindlichkeitsparameter der Projektionslichtleistung und der empfangenen Lichtverstärkung einzustellen, so dass der Empfangslichtsignalwert ein vorbestimmter Standardsignalwert ist; und
   eine Schwellenwerteinstelleinrichtung (26), die eine Betriebseinheit (31) mit einem Betriebsbereich, innerhalb dessen die Betriebseinheit (31) geeignet ist, betrieben zu werden, und eine weitere Einstelleinheit (44) umfasst, die geeignet ist, durch einen Betrieb der Betriebseinheit (31) von einem Ende des Betriebsbereichs zu dem anderen Ende des Betriebsbereichs den Schwellenwert in einem vorbestimmten Bereich zu variieren, der zwischen 50% und 130% in Bezug auf ein Verhältnis des Schwellenwerts zum Standardsignalwert enthalten ist.

3. Photoelektrischer Sensor (1; 1a; 1b; 1c) nach Anspruch 1 oder 2, wobei der vorbestimmte Bereich zwischen 70% und 110% liegt.

4. Photoelektrischer Sensor (1; 1a; 1b; 1c) nach einem der Ansprüche 1 bis 3, wobei die Betriebseinheit (31) ein drehbares Element enthält.

**Revendications**

1. Capteur photoélectrique (1 ; la ; 1b ; 1c) qui est un capteur photoélectrique transmissif ou un capteur photoélectrique rétroréfléchissant destiné à être utilisé en combinaison avec un élément rétroréfléchissant (2), comprenant :

   un moyen de projection de lumière (21) configuré pour émettre une lumière de détection pour détecter un objet de détection (6) qui est présent dans une région de détection (5) ;
   un moyen de réception de lumière (22) configuré pour recevoir la lumière de détection de la région de détection (5) ;
   un moyen de détermination (23) configuré pour déterminer si l'objet de détection (6) est présent ou non en comparant une valeur de signal de lumière reçue, qui est une valeur de signal de sortie du moyen de réception de lumière (22), avec un seuil ;
   un moyen de réglage du signal de lumière reçu (24) qui comprend une unité d'opération (31) ayant une plage d'opération dans laquelle l'unité d'opération (31) est configurée pour être opérée afin de régler au moins un paramètre de sensibilité de la puissance lumineuse de projection ou un gain lumineux reçu dans une plage prédéterminée, et une première unité de réglage (41) configurée pour régler, par une opération de l'unité d'opération (31) d'une extrémité à l'autre de la plage d'opération, l'au moins un paramètre de sensibilité de sorte qu'un rapport de la valeur maximale à la valeur minimale de la valeur du signal de lumière reçue ne soit pas supérieur à 2,6 ; et
   un moyen de réglage du paramètre de sensibilité (25) qui comprend une unité de réception d'entrée de déclenchement (32), et une seconde unité de réglage (42) configurée pour régler au moins l'un des paramètres suivants : la puissance lumineuse de projection, le gain lumineux reçu, et le seuil lorsque l'unité de réception d'entrée de déclenchement (32) reçoit une entrée de déclenchement alors que l'unité d'opération (31) est située à une position prédéterminée dans un état dans lequel l'objet de détection (6) n'est pas présent dans la région de détection (5),
   dans lequel la seconde unité de réglage (42) est configurée pour régler au moins l'un de la puissance lumineuse de projection, du gain lumineux reçu et du seuil de sorte que le seuil se situe entre la valeur maximale et la valeur minimale de la valeur du signal de lumière reçue, et de sorte que la première unité de réglage (41) comprend une plage de réglage qui est une plage prédéterminée qui est comprise entre 50 % et 130 % en termes de rapport du seuil à la valeur du signal de lumière reçue.

2. Capteur photoélectrique (1 ; 1a ; 1b ; 1c) qui est un capteur photoélectrique transmissif ou un capteur photoélectrique rétroréfléchissant destiné à être utilisé en combinaison avec un élément rétroréfléchissant (2), comprenant :

   un moyen de projection de lumière (21) configuré pour émettre une lumière de détection pour détecter un objet de détection (6) qui est présent dans une région de détection (5) ;
   un moyen de réception de lumière (22) configuré pour recevoir la lumière de détection de la région de détection (5) ;
   un moyen de détermination (23) configuré pour déterminer si l'objet de détection (6) est présent ou non en comparant une valeur de signal de lumière reçue, qui est une valeur de signal de sortie du moyen de réception de lumière (22), avec un seuil ;
   un moyen de réglage du paramètre de sensibilité (25) qui comprend une unité de réception d'entrée de déclenchement (32) et une unité de réglage (43) configurée pour régler, lorsque l'unité de réception d'entrée de déclenchement (32) reçoit une entrée de déclenchement dans un état dans lequel l'objet de détection (6) n'est pas présent dans la région de détection (5), au moins un paramètre de sensibilité de la puissance lumineuse de projection et du gain lumineux reçu de sorte que la valeur du signal de lumière reçue est une valeur de signal standard prédéterminée ; et
   un moyen de réglage du seuil (26) qui comprend une unité d'opération (31) ayant une plage de d'opération dans laquelle l'unité d'opération (31) est configurée pour être opérée, et une autre unité de réglage (44) configurée pour faire varier, par une opération de l'unité d'opération (31) d'une extrémité à l'autre de la plage d'opération, le seuil dans une plage prédéterminée qui est comprise entre 50 % et 130 % en termes de rapport du seuil à la valeur de signal standard.

3. Capteur photoélectrique (1 ; 1a ; 1b ; 1c) selon la revendication 1 ou 2, dans lequel la plage prédéterminée est comprise entre 70 % et 110 %.

4. Capteur photoélectrique (1 ; 1a ; 1b ; 1c) selon l'une quelconque des revendications 1 à 3, dans lequel l'unité d'opération (31) comprend un élément rotatif.

FIG. 1

FIG. 2

**FIG. 3**

## FIG. 4

**FIG. 5**

```
                    ┌─────────────────┐
                    │      Start       │
                    └─────────────────┘
                              │
                              ▼
                    ╱─────────────────╲           S1
                   ╱   Trigger received? ╲──────────
                    ╲─────────────────╱        No
                              │ Yes
                              ▼
        ┌─────────────────────────────────────┐
        │ Emit detection light A based on       │
        │ projection light power data stored    │  S2
        │ in storage unit                        │
        └─────────────────────────────────────┘
                              │
                              ▼
        ┌─────────────────────────────────────┐
        │ Receive return light B and output     │
        │ received light signal value based on  │  S3
        │ gain data stored in storage unit      │
        └─────────────────────────────────────┘
                              │
                              ▼
        ┌─────────────────────────────────────┐
        │   Adjust first sensitivity parameter  │  S4
        └─────────────────────────────────────┘
                              │
                              ▼
                    ╱─────────────────╲           S5
              No  ╱  Operation unit operated? ╲
                    ╲─────────────────╱
                              │ Yes
                              ▼
        ┌─────────────────────────────────────┐
        │ Adjust second sensitivity parameter   │  S6
        │ according to operation amount of      │
        │ operation unit                         │
        └─────────────────────────────────────┘
```

**FIG. 6**

**FIG. 7**

**FIG. 8**

```
                    ┌─────────────────────┐
                    │        Start        │
                    └─────────────────────┘
                               │
          ┌────────────────────┼◄──────────────────────┐
          │                    ▼                        │
          │              ╱───────────╲        S1        │
          └──────────◄  ╱  Trigger     ╲ ╱             │
                    No   ╲  received?  ╱                │
                          ╲───────────╱       No        │
                               │
                             Yes
                               ▼
          ┌──────────────────────────────────────────┐
          │ Emit detection light A based on           │
          │ projection light power data stored in     │  〜 S2
          │ storage unit                              │
          └──────────────────────────────────────────┘
                               │
                               ▼
          ┌──────────────────────────────────────────┐  〜 S3
          │ Receive return light B and output         │
          │ received light signal value based on      │
          │ gain data stored in storage unit          │
          └──────────────────────────────────────────┘
                               │
                               ▼
          ┌──────────────────────────────────────────┐
          │      Adjust third sensitivity parameter   │  〜 S15
          └──────────────────────────────────────────┘
                               │
          ┌────────────────────┼◄──────────────────────┐
          │                    ▼          S5            │
          │              ╱───────────────╲              │
          │         No  ╱ Operation unit   ╲            │
          └──────────◄  ╲    operated?    ╱             │
                          ╲───────────────╱             │
                               │                        │
                             Yes                        │
                               ▼                        │
          ┌──────────────────────────────────────────┐ │
          │ Adjust fourth sensitivity parameter       │ │  〜 S17
          │ according to operation amount of          │ │
          │ operation unit                            │ │
          └──────────────────────────────────────────┘ │
                               │                        │
                               └────────────────────────┘
```

# FIG. 9

Received light signal value

FIG. 10

EP 2 910 982 B1

## FIG. 11

**FIG. 12**

Indicator ON/OFF signal

33a
33b
33c
33d
33e
R3
Vcc
33

42 Second adjustment unit
32
23 Determination means
R3
Vcc
Vcc
0V

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002171162 A
- US 5608207 A

- US 2014001345 A1